(19) Europäisches Patentamt
European Patent Office
Office européen des brevets

(11) EP 0 692 493 B1

(12) **FASCICULE DE BREVET EUROPEEN**

(45) Date de publication et mention de la délivrance du brevet: **13.01.1999 Bulletin 1999/02**

(51) Int. Cl.[6]: **C08C 19/44**, C08K 3/36, B60C 1/00

(21) Numéro de dépôt: **95109519.9**

(22) Date de dépôt: **20.06.1995**

(54) **Polymères diéniques fonctionnels, leur procédé de préparation et leur utilisation dans des compositions élastomères chargées à la silice utilisables pour des enveloppes de pneumatiques**

Dienpolymere mit funktionellen Gruppen, ihre Herstellung und ihre Verwendung in für Laufflächen geeignete mit Kieselsäure verstärkte Gummimischungen

Diene polymers having functional groups, their preparation and their use in silica-reinforced rubber compositions suitable for treads

(84) Etats contractants désignés:
**AT BE DE ES FR GB IT**

(30) Priorité: **15.07.1994 FR 9408887**

(43) Date de publication de la demande:
**17.01.1996 Bulletin 1996/03**

(73) Titulaire:
**COMPAGNIE GENERALE DES ETABLISSEMENTS MICHELIN - MICHELIN & CIE**
**63040 Clermont-Ferrand Cédex (FR)**

(72) Inventeurs:
- **Gorce, Jean-Noel**
  **F-63200 Riom (FR)**
- **Labauze, Gérard**
  **F-63100 Clermont-Ferrand (FR)**

(74) Mandataire: **Hiebel, Robert**
**Michelin & Cie,**
**Service SGD/LG/PI Ladoux**
**63040 Clermont-Ferrand Cedex 01 (FR)**

(56) Documents cités:
**EP-A- 0 299 074** **US-A- 4 185 042**

EP 0 692 493 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Xerox (UK) Business Services
2.16.7/3.6

## Description

La présente invention est relative à des polymères diéniques fonctionnalisés présentant des propriétés de mise en oeuvre à l'état non vulcanisé et des propriétés hystérétiques à l'état vulcanisé améliorées dans des compositions élastomères comportant de la silice à titre de charge, à leur application dans des enveloppes de pneumatiques et à un nouveau procédé de préparation desdits polymères fonctionnalisés.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution d'enveloppes de pneumatiques tels que par exemple des sous-couches, des gommes de liaison entre caoutchoucs de différentes natures ou de calandrage de renforts métalliques ou textiles, des gommes de flancs ou des bandes de roulement et obtenir des pneumatiques aux propriétés améliorées, notamment possédant une résistance au roulement réduite.

Pour atteindre un tel objectif de nombreuses solutions ont été proposées consistant notamment à modifier la nature des polymères et copolymères diéniques en fin de polymérisation au moyen d'agents de couplage ou d'étoilage ou de fonctionnalisation. La très grande majorité de ces solutions se sont essentiellement concentrées sur l'utilisation des polymères modifiés avec du noir de carbone comme charge renforçante dans le but d'obtenir une bonne interaction entre le polymère modifié et le noir de carbone car l'usage de charges blanches renforçantes, et de silice notamment, s'est révélé inapproprié en raison du faible niveau de certaines propriétés de telles compositions et par voie de conséquence de certaines propriétés des pneumatiques mettant en oeuvre ces compositions. De surcroît, l'usage de la silice soulève des difficultés de mise en oeuvre dues aux interactions silice/silice qui tendent à l'état cru à provoquer une agglomération des particules de silice avant et même après mélangeage et ainsi à augmenter la consistance des compositions caoutchouteuses, en tout cas à rendre la mise en oeuvre plus difficile que la mise en oeuvre du noir de carbone. A titre d'exemples illustratifs de cet art antérieur, nous pouvons citer le brevet US-A-3 135 716 qui décrit la réaction de polymères diéniques vivants en fin de chaîne avec un agent de couplage organique polyfonctionnel pour obtenir des polymères aux propriétés améliorées. Le brevet US-A-3 281 383 qui décrit à titre d'agents de couplage ou greffage de polymères diéniques vivants des polyépoxydes, polyisocyanates, polyamines, polyaldéhydes, polycetones, polyanhydrides, polyesters, polyhalogénures parmi lesquels des composés polyhalogénés du silicium. Le brevet US-A-3 244 664 qui décrit à titre d'agent de couplage ou d'étoilage de polymères diéniques des tétraalcoyxysilanes. Le brevet français FR-A-69 24444 qui décrit à titre d'agent d'étoilage des composés comportant soit le groupe -0-C(0)-0-, soit le groupe -0-C(0)-R-C(0)-0- et qui conduit à des polymères diéniques ayant des propriétés de mise en oeuvre et des propriétés à l'état vulcanisé améliorées. Dans le brevet US-A-4 185 042 a été décrite l'utilisation de composés du silicium comprenant un groupe époxyde à titre d'agent de couplage et/ou d'étoilage de polymères diéniques en vue de préparer des polymères couplés et/ou étoilés. L'agent de couplage et/ou d'étoilage est présent à raison de 0,05 à 4 moles par mole de polymère ou copolymère vivant et il est mis à réagir avec le polymère vivant dans des conditions opératoires conduisant à une réaction de couplage et/ou d'étoilage. Les polymères couplés ou étoilés décrits dans ce brevet possèdent les propriétés à la fois d'un élastomère et d'un thermoplastique. Il n'est fait aucune référence à des mélanges chargés et rien ne permet à l'homme de l'art de penser que de tels polymères couplés ou étoilés pourraient présenter un intérêt pour des compositions comprenant de la silice comme charge renforçante. Plus récemment, dans la revue European Polymer Journal, Vol. 17, 1981, pages 213 à 220, A. Crespy et M.J. Abadie décrivent des oligomères polystyrène et polyisoprène fonctionnalisés par ouverture du cycle époxy à l'aide du 3-glycidyloxypropyltriméthoxysilane (GPTSI) obtenus en versant goutte à goutte sous agitation les oligomères vivants préparés par catalyse anionique sur l'agent de fonctionnalisation puis en désactivant par du méthanol. Il est précisé que le rendement est amélioré lorsque le GPTSI est mis en solution dans le tétrahydrofuranne (THF). Aux pages 221 à 227 de ce même volume, ces auteurs décrivent certains polymères fonctionnalisés par le GPTSI qui sont obtenus en préparant d'abord le polymère par polymérisation anionique, en le soumettant ensuite à une métallation à l'aide de naphtalène lithium en excès puis en versant goutte à goutte le polymère vivant sur une solution de GPTSI en excès. Le procédé de fonctionnalisation décrit par ces auteurs est totalement inexploitable industriellement.

L'intérêt d'utiliser de la silice à titre de charge renforçante dans des compositions élastomériques est ancien mais l'usage de silice à titre de charge renforçante est resté très limité en raison des inconvénients mentionnés ci-dessus et ce malgré les tentatives faites pour remédier à la déficience des propriétés exhibées par de telles compositions. Ainsi, il a été proposé d'utiliser des polymères diéniques fonctionnalisés à la place des polymères non fonctionnalisés. A titre d'exemple d'un tel art antérieur, on peut citer la demande de brevet européen EP-A-0 299 074 qui décrit une composition de caoutchouc diénique chargée à la silice à base d'un polymère diénique fonctionnalisé à l'aide d'un silane ayant un reste alcoxyle non hydrolysable. La demande de brevet européen EP-A-0 447 066 décrit une composition chargée à la silice renfermant un polymère diénique fonctionnalisé à l'aide d'un composé silane halogéné. Malgré l'amélioration des propriétés obtenues avec l'emploi de tels polymères fonctionnalisés, les compositions de silice décrites dans cet art antérieur ne se sont pas révélées utilisables pour constituer des bandes de roulement de pneumatiques car les propriétés exhibées quoique améliorées restent néanmoins insuffisantes par rapport au niveau requis. Cet intérêt pour les compositions renforcées à la silice a été relancé récemment avec la publication de la demande de brevet européen EP-A-0 501 227 qui divulgue une composition de caoutchouc vulcanisable au soufre obtenue par travail thermomécanique d'un copolymère de diène conjugué et d'un composé vinyle aromatique préparé par polymérisation en solution avec 30 à 150 parties en poids pour 100 parties en poids d'élastomère d'une silice précipitée particulière obtenue selon le procédé faisant l'objet de la demande de brevet européen EP-A-0 157 703, qui présente un excellent compromis entre plusieurs propriétés contradictoires et qui pour la première fois permet la commercialisation de pneus ayant une bande de roulement chargée à la silice possédant effectivement l'excellent compromis requis.

Il est connu de l'homme de l'art que des polymères diéniques fonctionnalisés conférant des propriétés très intéressantes à des compositions renfermant de la silice à titre de charge renforçante sont obtenus avec les tétra-alcoxysilanes et en particulier le tétraméthoxysilane (TMSI) utilisés en tant qu'agents de fonctionnalisation. Cela résulte par exemple du brevet US-A-3 244 664, déjà cité, qui mentionne les orthosilicates et décrit des compositions exhibant des propriétés améliorées mettant en oeuvre des polymères modifiés avec le tetraéthoxysilane.

L'enseignement que les composants tétra-alcoxysilanes sont les plus intéressants potentiellement pour réagir en bout de chaîne vis-à-vis de la silice résulte aussi de la demande de brevet EP-A-0 299 074, déjà citée, faisant elle-même référence à la demande de brevet japonais JP-A- 56/104 906 décrivant des agents de fonctionnalisation tétra-alcoxysilanes, et qui enseigne que certes ces composés augmentent très significativement les propriétés des polymères mais que les polymères ainsi fonctionnalisés lorsqu'ils sont soumis à un stripping à la vapeur d'eau pour éliminer le solvant de polymérisation subissent une évolution macrostructurale qui conduit à une sévère dégradation des propriétés potentiellement intéressantes. En outre cette évolution est très peu contrôlable.

Il est donc souhaitable d'obtenir des polymères diéniques fonctionnalisés possédant substantiellement le même niveau de propriétés que ceux fonctionnalisés avec le TMSI qui est potentiellement le plus réactif des tétra-alcoxysilanes mais au moyen d'un procédé bien contrôlable permettant la mise en oeuvre des moyens industriels classiques tout particulièrement l'opération de stripping à la vapeur d'eau.

La présente invention a pour but d'obtenir des polymères diéniques fonctionnalisés susceptibles de conférer des propriétés améliorées, notamment d'hystérèse et de renforcement, à des compositions d'élastomères contenant de la silice à titre de charge renforçante.

La présente invention a également pour objet à titre de produits industriels nouveaux, certains polymères diéniques fonctionnalisés.

L'invention a en outre pour objet un nouveau procédé de préparation des polymères diéniques fonctionnalisés qui soit susceptible d'être exploité avec les techniques usuelles industrielles et notamment qui permette l'usage du stripping à la vapeur d'eau.

L'invention concerne également de nouvelles compositions de caoutchouc contenant de la silice à titre de charge renforçante à base de polymères diéniques fonctionnalisés présentant des propriétés de mise en oeuvre à cru satisfaisantes et des propriétés améliorées à l'état vulcanisé notamment une meilleure hystérèse et un meilleur renforcement.

L'invention concerne en outre des bandes de roulement de pneumatiques et des pneumatiques possédant des propriétés améliorées notamment une résistance au roulement réduite.

La présente invention fournit un nouveau procédé de préparation de polymères diéniques fonctionnalisés consistant à préparer de manière connue en soi un polymère diénique vivant possédant une ou plusieurs extrémités de chaînes vivantes, à ajouter par mélangeage audit polymère vivant une quantité d'un agent de fonctionnalisation répondant à la formule générale I :

$$(Y)_m\text{-}R^1\text{-}Si(OR^2)_{3-n}R^3n$$

dans laquelle :

Y représente les restes

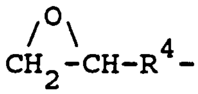 ou 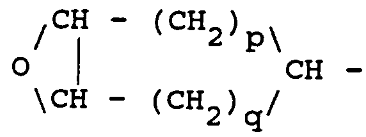

$R^1$ représente un reste alcoyle, cycloalcoyle ou aryle ayant de 1 à 10 atomes de carbone,

$R^2$ représente un reste alcoyle, aryle, cycloalcoyle, alkaryle, aralkyle ayant de 1 à 12 atomes de carbone,
$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,
n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4 étant entendu que la somme p + q doit représenter un nombre entier compris entre 2 et 5 inclusivement,
telle que le rapport molaire (RM) agent de fonctionnalisation sur nombre de sites actifs de l'initiateur soit égal ou supérieur à 1 puis à laisser réagir le polymère vivant avec l'agent de fonctionnalisation et récupérer le polymère fonctionnalisé.

Par polymères diéniques fonctionnalisés, on entend présentement tous les polymères entièrement fonctionnalisés ou substantiellement fonctionnalisés avec un composé répondant à la formule générale I qui satisfont simultanément aux 2 rapports suivants :

$$PF = \frac{Ns}{Np \times (fn)} \geq 0,85 \quad et \quad PV = \frac{Ne}{Ns \times m} \geq 0,90$$

dans lesquels :

Ns représente le nombre de moles de silicium liées à une extrémité de chaîne polymérique du polymère fonctionnalisé,
Np représente le nombre de moles de polymère avant fonctionnalisation,
f(n) représente la fonctionnalité de l'initiateur de polymérisation,
Ne représente le nombre de moles de fonction époxy liée à une extrémité de chaîne polymérique du polymère fonctionnalisé
m a la signification indiquée précédemment.

Le nombre de moles de silicium et le nombre de moles de fonction époxy présents dans le polymère fonctionnalisé peuvent être déterminés par mesure à l'aide des techniques connues de l'homme de l'art comme la résonance magnétique nucléaire (RMN), la colorimétrie.

Le nombre Np est obtenu par le rapport masse de polymère sur masse moléculaire en nombre du polymère, cette dernière étant déterminée par osmométrie ou tonométrie.

Parmi les agents répondant à la formule générale I conviennent à titre préférentiel le 2-glycidyloxyéthyltriméthoxysilane, le 3-glycidyloxypropyltriméthoxysilane (GPTSI), le 3-glycidyloxypropyltriéthoxysilane, le 2-(3,4-époxycyclohexyl)-éthyltriméthoxysilane (ECETSI).

Par polymères diéniques on entend tout homopolymère obtenu par polymérisation d'un monomère diène conjugué ayant de 4 à 12 atomes de ce carbone, tout copolymère obtenu par copolymérisation d'un ou plusieurs diènes conjugués entre eux ou avec un ou plusieurs composés vinyle aromatique ayant de 8 à 20 atomes de carbone. A titre de diènes conjugués conviennent notamment le butadiène-1,3, le 2-méthyl-1,3-butadiène, les 2,3-di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène et le 2,4-hexadiène.

A titre de composés vinyle aromatique conviennent notamment le styrène, l'ortho-, méta-, para-méthylstyrène, le mélange commercial "vinyle-toluène", le paratertiobutyl-styrène, les méthoxy-styrènes, les chloro-styrènes, le vinyle mésitylène, le divinyle benzène et le vinyle naphtalène.

Les copolymères peuvent contenir entre 99 % et 20 % en poids d'unités diéniques et de 1 % à 80 % en poids d'unités vinyle aromatiques. Les polymères peuvent avoir toute microstructure qui est fonction des conditions de polymérisation utilisées, notamment de la présence ou non d'un agent modifiant et/ou randomisant et des quantités d'agent modifiant et/ou randomisant employées. Les polymères peuvent être à blocs, statistiques, séquencés, microséquencés, et être préparés en dispersion ou en solution.

A titre préférentiel conviennent les polybutadiènes et en particulier ceux ayant une teneur en unités-1,2 comprise entre 4 % et 80 %, les polyisoprènes, les copolymères de butadiène-styrène et en particulier ceux ayant une teneur en styrène comprise entre 5 et 50 % en poids et plus particulièrement entre 20 % et 40 % en poids, une teneur en liaisons - 1,2 de la partie butadiénique comprise entre 4 % et 65 %, une teneur en liaisons trans-1,4 comprise entre 30 % et 80

%. Dans le cas de copolymères de butadiène-styrène-isoprène conviennent ceux ayant une teneur en styrène comprise entre 5 et 50 %, en poids et plus particulièrement comprise entre 10 % et 40 %, en isoprène comprise entre 15 % et 60 % en poids et plus particulièrement comprise entre 20 % et 50 % en poids, une teneur en butadiène comprise entre 5 et 50 % et plus particulièrement comprise entre 20 % et 40 % en poids, une teneur en unités-1,2 de la partie butadiénique comprise entre 4% et 85%, une teneur en unités trans-1,4 de la partie butadiénique comprise entre 6 % et 80 %, une teneur en unités-1,2 plus 3,4 de la partie isoprénique comprise entre 5 % et 70 % et une teneur en unités trans-1,4 de la partie isoprénique comprise entre 10 % et 50 %.

En tant qu'initiateur de polymérisation, on peut utiliser tout initiateur anionique ou non mono-ou polyfonctionnel connu. Toutefois un initiateur contenant un métal alcalin tel que le lithium ou alcalino-terreux tel que le baryum est utilisé à titre préférentiel. Comme initiateurs organolithiens conviennent notamment ceux comportant une ou plusieurs liaisons carbone-lithium. Des composés représentatifs sont les organolithiens aliphatiques tels que l'éthyl-lithium, le n-butyl-lithium (n-BuLi), l'isobutyl-lithium et les polyméthylènes dilithium tels que le 1,4-dilithiobutane. Des composés représentatifs contenant du baryum sont ceux décrits par exemple dans les demandes de brevet FR-A- 2 302 311 et FR-A- 2 273 822 et les certificats d'addition FR-A-2 338 953 et FR-A-2 340 958 dont le contenu est incorporé ici.

Par nombre de sites actifs on entend le nombre de sites effectivement disponibles pour mitier la polymérisation.

La polymérisation est, comme connu en soi, de préférence effectuée en présence d'un solvant inerte qui peut être par exemple un hydrocarbure aliphatique ou alicyclique comme le pentane, l'hexane, l'heptane, l'iso-octane, le cyclohexane ou un hydrocarbure aromatique comme le benzène, le toluène, le xylène.

La polymérisation peut être effectuée en continu ou en discontinu. On effectue généralement la polymérisation à une température comprise entre 20°C et 120°C et de préférence voisine de 30°C à 90°C. On peut bien entendu également ajouter en fin de polymérisation un agent de transmétallation pour modifier la réactivité de l'extrémité de chaîne vivante.

Il est essentiel que l'addition de l'agent de fonctionnalisation au polymère vivant se fasse au moyen d'un mélangeage approprié qui vise à atteindre le niveau de micromélange le plus élevé avant que les deux constituants puissent significativement réagir entre eux en quantité appréciable afin d'obtenir un degré d'homogénéité tel qu'il ne permette substantiellement que la réaction d'un seul site réactif du polymère vivant avec un seul groupement $SiOR^2$ de l'agent de fonctionnalisation. A cet effet, le temps caractéristique de mélangeage doit être inférieur ou égal et de préférence très inférieur au temps caractéristique de réaction entre les deux constituants et en outre inférieur et de préférence très inférieur au temps caractéristique de diffusion moléculaire des constituants en présence.

Le mélangeage peut être réalisé par tout moyen approprié notamment à l'aide de tout mélangeur statique et/ou tout mélangeur dynamique connus de l'homme de l'art. Conviennent particulièrement les dispositifs de mélangeage qui dissipent des puissances volumiques de l'ordre de 0,1 à 100 $kW/m^3$/unité de viscosité dynamique du mélange réactionnel en Pa.s et préférentiellement qui dissipent des puissances volumiques comprises entre 1 et 10 $kW/m^3$ /Pa.s.

Etant bien connu de l'homme de l'art que la température de mélangeage de deux constituants susceptibles de réagir chimiquement entre eux est un des paramètres qui influent fortement sur la vitesse de réaction chimique des constituants mélangés et sur les propriétés physiques du fluide réactionnel résultant du mélangeage, l'homme de l'art pour réaliser les polymères diéniques fonctionnalisés et/ou substantiellement fonctionnalisés ayant des propriétés prédéfinies adaptera bien sûr les différents paramètres les uns aux autres et notamment la température de mélangeage, le dispositif de mélangeage, l'intensité du mélangeage et le choix du rapport RM, étant entendu que d'un point de vue industriel, il est économiquement avantageux de se rapprocher de la valeur RM=1.

Le procédé selon l'invention permet ainsi avec une grande souplesse d'obtenir et d'orienter la réaction de fonctionnalisation et ce au détriment de la réaction de couplage et/ou d'étoilage. Le caractère fonctionnel du polymère peut être déterminé quantitativement par l'homme de l'art par les techniques appropriées connues de l'homme de l'art de dosage du nombre de moles de silicium, de fonction époxy présentes telles la RMN, la colorimétrie et ce quel que soit le caractère mono ou polyfonctionnel du polymère.

La réalité de la réaction de fonctionnalisation peut être mise en évidence par les 2 rapports PF et PV . Les polymères diéniques fonctionnalisés selon le procédé conforme à l'invention présentent simultanément un rapport PF $\geq$ 0,85 et PV $\geq$ 0,90.

La réalité de la réaction de couplage et/ou d'étoilage peut être mise en évidence au moyen soit du saut d'étoilage apparent (SEA), soit du saut de viscosité (SV). Dans le cas d'un initiateur monofonctionnel, le SEA est égal au rapport des masses moléculaires du polymère fonctionnalisé/polymère non fonctionnalisé. Plus ce rapport est élevé plus il exprime un couplage ou un étoilage important. Le saut de viscosité est égal au rapport viscosité inhérente du polymère fonctionnalisé, c'est-à-dire du polymère récupéré après réaction avec l'agent de fonctionnalisation, sur viscosité inhérente du polymère vivant stoppé au méthanol. Un rapport 1 pour le saut de viscosité exprime une réaction de pure fonctionnalisation. Plus ce rapport est élevé plus il exprime la présence d'une réaction de couplage ou d'étoilage La viscosité inhérente (dl/g) est mesurée à 25°C en solution à 1 g/litre dans le toluène.

La fonctionnalisation peut bien sûr être réalisée avec un composé ou plusieurs composés répondant à la formule générale I. La fonctionnalisation peut être réalisée en une seule étape pour conduire à un polymère diénique entièrement fonctionnalisé. La fonctionnalisation peut également être réalisée en plusieurs étapes pour conduire à un polymère diénique substantiellement fonctionnalisé, c'est-à-dire à un polymère possédant au moins 70 % de molécules répondant à la formule II (Y)m-$R^1$-Si($OR^2$)$_2$-P lorsqu'on utilise un initiateur monofonctionnel ou au moins 60 % d'extrémités de chaînes répondant à la formule III (Y)m-$R^1$-Si($OR^2$)$_2$-P' lorsqu'on utilise un initiateur polyfonctionnel, dans lesquelles

$R^1$ représente un reste alcoyle, cycloalcoyle ou aryle ayant de 1 à 10 atomes de carbone,
$R^2$ représente un reste alcoyle, aryle, cycloalcoyle, alkaryle, aralkyle ayant de 1 à 12 atomes de carbone,
$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,
n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4 étant entendu que la somme p + q doit représenter un nombre entier compris entre 2 et 5 inclusivement,
P représente la chaîne du polymère diénique et P' une extrémité de chaîne polymérique diénique dans le cas d'un initiateur polyfonctionnel. , préférentiellement de 80% à 100%, et au maximum 20 % de chaînes étoilées ou couplées. Lorsqu'une modification du polymère vivant est opérée en deux ou plusieurs étapes, la réaction de fonctionnalisation doit toujours intervenir en dernier lieu après la réaction de couplage et/ou d'étoilage pour qu'il y ait fonctionnalisation des chaînes vivantes non stoppées au cours de l'étape ou des étapes précédentes. Il est bien sûr possible dans le cadre d'une fonctionnalisation en plusieurs étapes, deux ou plus, de fonctionnaliser le polymère vivant avec un agent de fonctionnalisation différent de ceux répondant à la formule générale I comme par exemple des dérivés appropriés de la benzophénone ou de l'étain, un composé alcoxy-silane halogéné ou non, etc...

Il est également possible d'utiliser dans la première étape un composé de formule I en tant qu'agent de couplage et/ou d'étoilage de même qu'il est possible d'utiliser dans la première étape tout agent de couplage ou d'étoilage de polymères diéniques décrits dans l'art antérieur, notamment ceux, comme les dérivés d'étain, ayant une affinité pour du noir de carbone. Ainsi il est possible d'obtenir des polymères substantiellement fonctionnalisés particulièrement intéressants pour conférer des propriétés améliorées tant vis-à-vis de la silice que du noir de carbone à des compositions contenant à la fois de la silice et du noir de carbone comme charges renforçantes.

Bien entendu, on peut ajouter un ou plusieurs agents antioxydants au mélange réactionnel avant récupération du polymère fonctionnalisé. Le polymère fonctionnalisé est séparé du milieu réactionnel par des techniques classiques, c'est-à-dire soit par coagulation, soit par entraînement à la vapeur d'eau du solvant, soit par évaporation par quelque moyen que ce soit comme par exemple évaporation sous vide puis séchage si c'est nécessaire.

Le procédé conforme à l'invention, contrairement à celui de l'art antérieur, est exploitable industriellement de manière économique non seulement en raison de la rapidité de la réaction de fonctionnalisation du polymère vivant qui est compatible avec une marche industrielle mais aussi et principalement en raison du fait qu'il perme l'élimination subséquente du solvant de polymérisation présent dans le polymère fonctionnalisé par entraînement à la vapeur d'eau, classiquement dénommé stripping, et cela sans qu'une évolution macrostructurale du polymère fonctionnalisé se manifeste, laquelle se traduit par exemple par une augmentation considérable de la viscosité Mooney, contrairement à ce qui est le cas et bien connu de l'homme de l'art avec le TMSI par ailleurs considéré par l'homme de l'art comme l'agent de fonctionnalisation silane conduisant au polymère fonctionnalisé le plus réactif vis-à-vis de la silice et à des compositions renfermant de la silice à titre de charge possédant d'excellentes propriétés, notamment au niveau de l'hystérèse. Le procédé selon l'invention permet d'obtenir des polymères diéniques fonctionnalisés ayant une viscosité Mooney qui pet s'étendre sur une large échelle comprise entre 10 et 150 et de préférence comprise entre 30 et 100.

L'invention a également pour objet à titre de produits industriels nouveaux les polymères diéniques fonctionnalisés possédant au moins 70 % de molécules répondant à la formule générale II:

(Y)m-$R^1$-Si($OR^2$)$_2$-P lorsque l'initiateur de polymérisation est monofonctionnel ou au moins 60 % d'extrémités de chaînes répondant à la formule générale III :

(Y)m-$R^1$-Si($OR^2$)$_2$-P' lorsque l'initiateur est polyfonctionnel

dans lesquelles

Y représente les restes

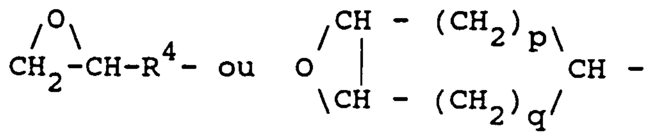

$R^1$ représente un reste alcoyle, cycloalcoyle ou aryle ayant de 1 à 10 atomes de carbone,
$R^2$ représente un reste alcoyle, aryle, cycloalcoyle, alkaryle, aralkyle ayant de 1 à 12 atomes de carbone,
$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,
n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4 étant entendu que la somme p + q doit représenter un nombre entier compris entre 2 et 5 inclusivement,
P représente la chaîne du polymère et P' une extrémité de chaîne polymérique de l'un des polymères compris dans le groupe suivant :
un homopolymère du 1,3-butadiène, d'un 2,3-di(alcoyle en $C_1$ à $C_5$) - 1,3-butadiène, d'un aryle-1,3-butadiène, du 1,3-pentadiène et du 2,4-hexadiène, un copolymère d'un diène conjugué ayant de 4 à 12 atomes de carbone comprenant un ou plusieurs diènes conjugués et un ou plusieurs composés vinyle aromatiques, et possédant une viscosité Mooney comprise entre 10 et 150.

A titre préférentiel comme polymères fonctionnalisés nouveaux répondant aux formules générales II ou III conviennent les polybutadiènes, les copolymères butadiène-styrène et plus particulièrement les copolymères butadiène-styrène ayant une teneur en styrène comprise entre 5 % et 50 % en poids, une teneur en liaisons - 1,2 de la partie butadiénique comprise entre 4 % et 65 %, une teneur en liaisons trans-1,4 comprise entre 30 % et 80 %, les copolymères du butadiène-styrène-isoprène, notamment ceux ayant une teneur en styrène comprise entre 5 et 50 %, en poids et plus particulièrement 10 % et 40 %, en isoprène comprise entre 15 % et 60 % en poids et plus particulièrement comprise entre 20 % et 50 % en poids, une teneur en butadiène comprise entre 5 et 50 % et plus particulièrement comprise entre 20 % et 40 % en poids, une teneur en unités-1,2 de la partie butadiénique comprise entre 4 % et 85 %, une teneur en unités trans-1,4 de la partie butadiénique comprise entre 6 % et 80 %, une teneur en unités-1,2 plus 3,4 de la partie isoprénique comprise entre 5 % et 70 % et une teneur en unités trans-1,4 de la partie isoprénique comprise entre 10 % et 50 %. Bien entendu, la teneur totale des différentes liaisons est toujours égale à 100 %.

Les polymères fonctionnalisés avec l'agent de fonctionnalisation répondant à la formule générale I possèdent une aptitude particulière à être utilisés pour constituer des compositions de caoutchouc comprenant de la silice à titre de charge renforçante. Ils possèdent et confèrent aux compositions non vulcanisées contenant au moins pour partie ou exclusivement de la silice à titre de charge renforçante des propriétés de mise en oeuvre satisfaisantes, notamment une extrudabilité ou une aptitude au tirage à l'aide d'une boudineuse compatible avec les outils industriels. Par ailleurs ces polymères permettent d'obtenir des compositions vulcanisées possédant des propriétés mécaniques améliorées ainsi qu'une hystérèse réduite ce qui les rend particulièrement appropriées pour être utilisées dans la fabrication de pneus. A titre préférentiel, conviennent les compositions à base de polymères diéniques ayant de 80 % à 100 %. de chaînes polymériques fonctionnalisées.

Cet effet bénéfique au niveau des propriétés est obtenu avec toutes les silices précipitées connues de l'homme de l'art présentant une surface BET inférieure ou égale à 450 m2/g, une surface spécifique CTAB inférieure ou égale à 450 m2/g même si cette amélioration est plus prononcée avec une silice précipitée hautement dispersible. Par silice hautement dispersible on entend toute silice ayant une aptitude à la désagglomération et à la dispersion dans une matrice polymérique très importante observable par microscopie, électronique ou optique, sur coupes fines. Comme exemples non limitatifs de telles silices hautement dispersibles préférentielles on peut citer celles décrites dans les demandes de brevet européen EP-A-0 157 703 et EP-A-0 520 862 ou la silice Zeosil 1165 MP de la Société Rhône-Poulenc, la silice Perkasil KS 430 de la Société Akzo, la silice Hi-Sil 2000 de la Société PPG.

L'effet bénéfique est obtenu quel que soit l'état physique sous lequel se présente la silice, c'est-à-dire qu'elle se présente sous forme de poudre, de microperles, de granulés, de billes et quelle que soit la surface spécifique de la silice. Lorsqu'on utilise à la fois de la silice et du noir de carbone comme charges renforçantes dans des compositions, des propriétés améliorées sont toujours obtenues au niveau des compositions vulcanisées. On peut bien entendu également utiliser des coupages de différentes silices et utiliser d'autres charges blanches.

Comme noirs de carbone, conviennent tous les noirs de carbone, notamment tous les noirs commercialement disponibles ou conventionnellement utilisés dans les pneus et particulièrement dans les bandes de roulement des pneus. La quantité de noir de carbone présente peut varier dans de larges limites étant toutefois entendu que l'amélioration des propriétés sera d'autant plus importante que le taux de silice présent est élevé. La quantité de noir de carbone présente est préférentiellement égale ou inférieure à 200 % de la quantité de silice présente dans la composition.

Les polymères fonctionnalisés peuvent être utilisés seuls dans les compositions de caoutchouc ou en coupage avec tout autre élastomère diénique, en particulier avec tout élastomère conventionnellement utilisé dans les pneus et en particulier dans les bandes de roulement. Il est toutefois évident que plus la proportion d'élastomère conventionnel présent dans la composition est importante, moindre sera l'amélioration. C'est pourquoi l'élastomère conventionnel, tel que le caoutchouc naturel, le polybutadiène, le polyisoprène, un copolymère butadiène-styrène ou butadiène-styrène-isoprène peut être présent entre 1 et 70 parties en poids pour 100 parties de polymère fonctionnalisé selon l'invention. Cet élastomère conventionnel peut bien sûr être luimême un élastomère entièrement ou partiellement fonctionnalisé avec un agent de fonctionnalisation autre que celui mis en oeuvre dans le procédé conforme à l'invention ou être un polymère couplé ou étoilé y compris avec un composé répondant à la formule générale I.

Les compositions conformes à l'invention peuvent évidemment également contenir les autres constituants et additifs habituellement utilisés dans les mélanges de caoutchouc comme des plastifiants, pigments, antioxydants, du soufre, des accélérateurs de vulcanisation, des huiles d'extension, un ou des agents de couplage ou de liaison de silice et/ou un ou des agents de recouvrement de la silice tels que des polyols, amines et des alcoxysilanes.

L'invention est illustrée par les exemples qui ne sauraient constituer une limitation de la portée de l'invention.

Dans les exemples, les propriétés des compositions sont évaluées comme suit :

- Modules d'allongement à 300 % (MA 300), 100 % (MA100) et 10 % (MA 10) : mesures effectuées selon la norme ISO 37
- Indices de cassage Scott : mesurés à 20°C et à 100°C,
  Force rupture (FR) en MPa
  Allongement à la rupture (AR) en %
- Pertes hystérétiques (PH) : mesurées par rebond à 60°C
- Propriétés dynamiques en cisaillement :
  Mesures en fonction de la déformation : effectuées à 10 Hertz avec une déformation crête-crête allant de 0,15 % à 50 %. La non linéarité exprimée est la différence de module de cisaillement entre 0.15 % et 50 % de déformation en MPa. L'hystérèse est exprimée par la mesure de tgδ à 7 % de déformation.
  Mesures en fonction de la température : effectuées à 10 Hertz sous une contrainte répétitive de 20 N/cm2 avec un balayage en température de - 80°C à 100°C. L'hystérèse est exprimée par la mesure de tgδ à 0°C et 60°C selon la norme ASTM D2231-71 (réapprouvée en 1977).

Exemple 1

Cet exemple a pour but de décrire un mode d'exécution en discontinu du procédé de préparation d'un polymère fonctionnalisé selon l'invention.

Dans cet exemple on réalise 6 essais identiques à l'exception des quantités variables d'agent de fonctionnalisation mises en oeuvre dans chacun des essais. Dans un réacteur de 10 litres sous pression d'azote, on introduit 6,35 l de toluène à titre de solvant puis 500 g de 1,3-butadiène et enfin 250 ppm de THF à titre d'agent promoteur de liaisons vinyliques. On ajoute ensuite du n-BuLi en quantité appropriée pour neutraliser les impuretés présentes dans le milieu réactionnel après quoi on ajoute 0,00300 mole de n-BuLi représentant la quantité d'initiateur actif pour initier la polymérisation. Celle-ci est effectuée à 60°C durant 48 minutes et le taux de conversion mesuré est de 100 %. Tous les polybutadiènes possèdent une teneur en liaisons-1,2 de 23 %, une teneur en liaisons-trans-1,4 de 44 % et une teneur en liaisons cis-1,4 de 33 %.

Dans le réacteur contenant le polybutadiène ayant une extrémité vivante C-lithium, on ajoute sous agitation intense le GPTSI* en quantités variables appropriées pour chacun des essais. La réaction de fonctionnalisation est effectuée à 60°C. Dans le cadre de l'essai témoin 1, du méthanol est ajouté à la place du GPTSI en une quantité telle qu'on ait un rapport méthanol/initiateur égal à 2. Trois minutes après l'addition du GPTSI ou du méthanol on ajoute 0,5 partie pour cent parties d'élastomère de 4,4'-méthylène-bis-2,6-ditertiobutyl phénol en tant qu'agent antioxydant. Le polybutadiène obtenu pour chacun des essais est coagulé dans le méthanol et séché à 50°C sous pression réduite durant 36 heures.

Pour chacun des polymères, on mesure la viscosité inhérente finale, la viscosité Mooney (1 + 4 à 100°C), la masse

(*)GPTSI vendu par la société Hüls sous la dénomination commerciale DYNASYLAN GLYMO.

moléculaire en nombre (Mn) déterminée par osmométrie, les taux de fonction époxy et d'atome de silicium, le saut d'étoilage apparent et le saut de viscosité.

La mesure des taux de fonction époxy et d'atomes de silicium est effectuée de la manière suivante : pour chacun des essais, on prélève 10 g du polymère modifié qui sont soumis à une extraction par plusieurs cycles de dissolution à l'aide de disulfure de carbone puis à une coagulation dans le méthanol afin d'éliminer la présence de toute trace d'agent répondant à la formule I résiduelle, c'est-à-dire qui ne serait pas liée au polymère. Le spectre $^1H$ RMN du polymère est caractérisé par un massif à 2,9 ppm correspondant au déplacement chimique du motif CH-0 de la fonction époxy et par un massif à 0,5 ppm correspondant au déplacement chimique du motif $SiCH_2$.

A partir du spectre obtenu pour le polymère préparé dans le cadre de l'essai 3, le calcul permet de déterminer que le polymère contient 0,028 motif $SiCH_2$ et 0,026 motif d'époxy pour 100 motifs butadiénique, ce qui correspond à 5,2 millimoles de motif $SiCH_2$ et 4,8 millimoles de motif époxy par kilogramme de polymère. La masse moléculaire du polymère non modifié est de 169 000 g/mole. Les valeurs ainsi obtenues permettent de déterminer la valeur des rapports PF et PV qui sont respectivement de :

PF = [0,0052/(1000/169.000)] x 1 = 0,88
PV = (0,0048/0,0052) x 1 = 0,92

Les résultats sont consignés dans le tableau I :

TABLEAU I

| Essais | RM | Viscosité Inhérente | Viscosité Mooney | Mnx$10^3$ | SV | SEA | PF | PV |
|---|---|---|---|---|---|---|---|---|
| 1 | 0 | 1,97 | 25 | 169 | - | - | - | - |
| 2 | 0,5 | 2,57 | 82 | 252 | 1,30 | 1,49 | 0,52 | 0,71 |
| 3 | 1,0 | 2,17 | 46 | 195 | 1,12 | 1,15 | 0,88 | 0,92 |
| 4 | 1,5 | 2,11 | 43 | 188 | 1,08 | 1,10 | 0,90 | 0,93 |
| 5 | 3,0 | 2,05 | 34 | 177 | 1,05 | 1,05 | 0,93 | 0,96 |
| 6 | 5,0 | 1,99 | 31 | 171 | 1,01 | 1,01 | 0,95 | 0,97 |

(*)GPTSI vendu par la société Hüls sous la dénomination commerciale DYNASYLAN GLYMO.

Les distributions des masses moléculaires, obtenues par chromatographie par exclusion de taille, sont représentées par les figures 1 à 4 pour les polymères des essais 1, 2, 4 et 6.

Sur ces figures :

L'axe des X représente sous forme logarithmique décimale une échelle des masses moléculaires (Mi) en g/mole des polymères. L'axe des masses moléculaires Mi est calibré en utilisant des témoins polybutadiène contenant 11 % de liaisons-1,2 et 48 % de liaisons trans-1,4.

L'axe des Y représente une échelle arbitraire proportionnelle à la masse de polymère de masse moléculaire Mi.

Les résultats montrent que lorsque le rapport RM est égal ou supérieur à 1 il y a exclusivement comme dans l'essai 6 ou substantiellement comme dans les essais 3 à 5 une réaction de fonctionnalisation contrairement à la réaction de couplage qui a lieu à titre principal dans l'essai 2 conformément à l'état de la technique constitué par le brevet US-B-4 185 042. Le SEA du polymère préparé selon l'essai 2 est élevé mais cependant inférieur à celui dont il est fait état dans ce brevet et qui est ≧ à 2.

Exemple 2

Cet exemple a pour but de décrire un mode d'exécution en continu du procédé de préparation d'un copolymère butadiène-styrène fonctionnalisé selon l'invention et l'influence du mélangeage et de son intensité sur la réaction de fonctionnalisation.

Dans un réacteur de 32 litres de capacité utile avec agitateur du type turbine, on introduit en continu du toluène, du butadiène, du styrène et du THF dans un rapport massique 100 : 10 : 4,3 : 0,3 et une solution de 530 micromoles de n-BuLi actif pour cent grammes de monomères. Les débits de ces différentes solutions sont calculés pour avoir un temps moyen de séjour de 45 minutes sous forte agitation. La température est maintenue constante à 60°C. En sortie de réacteur la conversion mesurée est de 88 %.

Le copolymère SBR contient 26 % de styrène incorporé et une teneur de 41 % de liaisons-1,2 pour la partie butadiénique.

En sortie de réacteur l'agent de fonctionnalisation est ajouté au polymère à l'entrée, soit d'un mélangeur statique (MS) conventionnel comportant 26 éléments et un volume de 250 ml, soit à l'entrée d'un mélangeur dynamique (MD) de 250 ml muni d'un agitateur réglé à une vitesse de rotation de 3100 tours par minute. On réalise 8 essais avec des quantités variables de GPTSI. La réaction de fonctionnalisation est effectuée à 60°C. Dans le cadre de l'essai témoin 14, du méthanol est ajouté à la place du GPTSI en une quantité telle qu'on ait un rapport méthanol/initiateur égal à 2. En outre, pour chacun des essais 7 à 11 réalisés avec un rapport RM ≧ 1,00, on réalise un essai témoin, indicé b, dans lequel le copolymère est stoppé au méthanol avec un rapport méthanol/initiateur de 2 comme dans les quatre essais 7 à 11 mais en utilisant une quantité d'initiateur actif appropriée pour obtenir un copolymère ayant substantiellement la même viscosité inhérente que le copolymère fonctionnalisé de chaque essai correspondant. Pour tous les essais, après 2 minutes on ajoute 0,8 partie pour cent parties de copolymère de 2,2'-méthylène bis(4-méthyl-6-tertiobutylphénol) et 0,2 partie de N-(1,3-diméthyl-butyl)-N'-phényl-p-phénylènediamine en tant qu'antioxydants. Le copolymère est récupéré par l'opération classique de stripping à la vapeur d'eau du solvant puis séché à l'étuve à 50°C. Les viscosités inhérentes sont mesurées avant l'opération de stripping.

Les résultats sont consignés dans le tableau II.

TABLEAU II

| Essais | RM | Type Mélange | Viscosité Inhérente | Viscosité Mooney | Mnx10$^3$ | SV | SEA | PF | PV |
|---|---|---|---|---|---|---|---|---|---|
| 7 | 4,13 | MS | 2,28 | 84 | 196 | 1,09 | 1,11 | 0,90 | 0,94 |
| 7b | 0 | MS | 2,26 | 82 | - | - | - | - | - |
| 8 | 3,00 | MD | 2,12 | 72 | 184 | 1,01 | 1,05 | 0,94 | 0,96 |
| 8b | 0 | MS | 2,10 | 69 | - | - | - | - | - |
| 9 | 2,00 | MD | 2,10 | 70 | 178 | 1,00 | 1,01 | 0,95 | 0,98 |
| 9b | 0 | MS | 2,10 | 69 | - | - | - | - | - |
| 10 | 1,65 | MS | 2,33 | 86 | 207 | 1,11 | 1,18 | 0,86 | 0,92 |
| 10b | 0 | MS | 2.30 | 85 | - | - | - | - | - |
| 11 | 1,00 | MD | 2,23 | 77 | 187 | 1,06 | 1,06 | 0,92 | 0,94 |
| 11b | 0 | MS | 2,20 | 76 | - | - | - | - | - |
| 12 | 0,83 | MS | 2,43 | 91 | 220 | 1,16 | 1,25 | 0,78 | 0,86 |
| 13 | 0,20 | MS | 2,62 | 109 | 240 | 1,25 | 1,36 | 0,22 | 0,36 |
| 14 | 0 | MS | 2,10 | 68 | 176 | - | - | - | - |

Les résultats des essais 7 à 11 montrent que la fonctionnalisation est plus importante lorsque le mélangeage de 2 constituants est effectué à l'aide d'un mélangeur dynamique, c'est-à-dire lorsque l'intensité du mélangeage est grande

; ceci permet de fonctionnaliser avec un rapport RM se rapprochant de 1, rapport qui est économiquement intéressant d'un point de vue industriel.

Les valeurs concernant les essais 8 et 9 montent qu'il y a eu quasi-exclusivement une réaction de fonctionnalisation sur le silicium tandis que celles concernant les essais 12 et 13 montrent qu'il y a un couplage et/ou étoilage important et principalement par ouverture de la fonction époxy.

Cet exemple montre que par un choix judicieux du procédé de mélangeage, il est possible d'exercer un contrôle sur la valeur du rapport molaire RM et par voie de conséquence d'orienter et de contrôler la réaction de fonctionnalisation.

Les essais 7 à 11 montrent également par comparaison avec les polymères des essais témoins correspondants de même viscosité inhérente avant stripping que les polymères fonctionnalisés selon le procédé conforme à l'invention ne conduisent pas à une évolution de macrostructure lors de l'opération de stripping comme en témoigne l'indice de viscosité Mooney.

Exemple 3

Cet exemple a pour but de préparer un copolymère butadiène-styrène-isoprène fonctionnalisé selon le procédé conforme à l'invention.

Dans un réacteur de 32 litres de capacité utile avec agitateur du type turbine, on introduit en continu du toluène, du butadiène, du styrène, de l'isoprène et du THF dans un rapport massique 100 : 3,0 : 4,0 : 4,1 : 0,06 et une solution de 410 micromoles de n-BuLi actif pour 100 g de monomères. Les débits de ces différentes solutions sont calculés pour avoir un temps de séjour de 45 minutes. La température est maintenue constante à 75°C. En sortie de réacteur, la conversion mesurée est de 81 %. Le terpolymère SBIR contient 25 % de styrène incorporé, 33 % de butadiène incorporé possédant une teneur en liaisons -1,2 de 25 % tandis que la teneur en liaisons-3,4 pour la partie isoprénique est de 20 %.

En sortie de réacteur, on ajoute le GPTSI à l'entrée d'un mélangeur statique, comportant 26 éléments et un volume de 250 ml, au polymère vivant.

La réaction de fonctionnalisation est effectuée à 60°C. Dans le cadre de l'essai témoin 16, du inéthanol est ajouté à la place du GPTSI en une quantité telle qu'on ait un rapport méthanol/initiateur égal à 2. Après 2 minutes on ajoute 0,8 partie pour cent parties de copolymère de 2,2'-méthylène bis(4-méthyl-6-tertiobutylphénol) et 0,2 partie de N-(1,3-diméthyl-butyl)-N'-phényl-p-phénylènediamine en tant qu'antioxydants. Le copolymère est récupéré puis soumis à l'opération classique de stripping à la vapeur d'eau puis séché à l'étuve à 50°C. Les viscosités inhérentes sont mesurées avant l'opération de stripping.

Les résultats sont consignés dans le tableau III

TABLEAU III

| Essais | Agent de fonctionnalisation | RM | Viscosité Inhérente | Viscosité Mooney | $Mnx10^3$ | SV | SEA | PF | PV |
|---|---|---|---|---|---|---|---|---|---|
| 15 | GPTSI | 2,0 | 2,38 | 69 | 220 | 1,10 | 1,16 | 0,88 | 0,91 |
| 16 | - | - | 2,16 | 54 | 190 | - | - | - | - |

Exemple 4

Cet exemple a pour but de décrire la préparation de copolymères fonctionnalisés avec différents agents de fonctionnalisation dans le but de mettre en évidence les excellentes propriétés des compositions de caoutchouc renfermant de la silice à titre de charge renforçante et comprenant un polymère fonctionnalisé avec un agent de fonctionnalisation répondant à la formule générale I.

On prépare 7 polymères selon la méthode de synthèse décrite à l'exemple 2 et qui ne s'en distingue que par le fait que la quantité d'initiateur actif utilisée est ajustée de manière à ce que la valeur de l'indice de viscosité Mooney de chaque polymère fonctionnalisé soit de 70 ± 3. La viscosité inhérente a été mesurée avant et après fonctionnalisation avant stripping pour pouvoir déterminer le saut de viscosité SV. Les 7 polymères possèdent la même microstructure que ceux préparés à l'exemple 2.

Pour réaliser 5 essais on utilise les agents de fonctionnalisation suivants :

pour l'essai A, le GPTSI
pour l'essai A', le ECETSI
pour l'essai B, le propyltriméthoxysilane (PTSI)
pour l'essai C, le 3-chloropropyltriméthoxysilane (CPTSI)
pour l'essai D, le TMSI.

Pour réaliser les 2 derniers essais qui sont des essais témoins, on utilise pour l'essai E, le GPTSI à titre d'agent d'étoilage dans les conditions du brevet US-B-4 185 042 tandis que pour l'essai T, on prépare un SBR simplement stoppé au méthanol. Pour les 7 essais, on a utilisé le même mélangeur statique que celui décrit à l'exemple 2.

Le polymère fonctionnalisé avec le TMSI est recueilli comme décrit dans l'exemple 1 et non comme décrit dans l'exemple 2 car l'utilisation du TMSI comme agent de fonctionnalisation et non comme agent de couplage ou d'étoilage conduit à une évolution inéluctable de macrostructure lors de l'opération de stripping, comme en témoignent les valeurs des viscosités Mooney mesurées qui s'étendent de 78 à 107 conformément à une évolution bien connue de l'homme de l'art.

Les résultats sont consignés dans le tableau IV.

TABLEAU IV

| Essais | Agent de fonction nalisation | RM | Viscosité Inhérente | Viscosité Mooney | SV | $Mnx10^3$ | PF |
|---|---|---|---|---|---|---|---|
| A | GPTSI | 2,0 | 2,16 | 72 | 1,08 | 180 | 0,91 |
| A' | ECETSI | 2,0 | 2,12 | 70 | 1,00 | 178 | 0,95 |
| B | PTSI | 1,5 | 2,14 | 73 | 1,02 | 185 | 0,93 |
| C | CPTSI | 1,5 | 2,18 | 70 | 1,02 | 180 | 0,90 |
| D | TMSI | 2,6 | 2,10 | 68 | 1,07 | 175 | 0,90 |
| E | GPTSI | 0,2 | 2,08 | 72 | 1,32 | 180 | 0,19 |
| T | MEOH | 1,5 | 2,12 | 70 | - | 182 | 0 |

On notera l'absence d'évolution au stripping pour les essais A et A' comme en témoigne la relation viscosité Mooney/viscosité inhérente avant stripping qui est très proche de celle du témoin T stoppé au méthanol.

Exemple 5

Les 7 copolymères obtenus à l'exemple 4 sont étudiés dans une composition renforcée exclusivement par de la silice à titre de charge renforçante et adaptée pour constituer une bande de roulement de pneu de tourisme.

Chaque composition est réalisée selon la méthode décrite dans la demande de brevet européen-EP-A-0 501 227,

incorporée dans la présente demande, étant précisé qu'on opère un travail thermo-mécanique en deux étapes qui durent respectivement 5 et 4 minutes, pour une vitesse moyenne des palettes de 45 tours/par minute jusqu'à atteindre une température maximale de tombée identique de 160°C tandis que l'étape de finition est effectuée à 30°C.

La formulation suivante est utilisée pour réaliser les 7 compositions, toutes les parties sont exprimées en poids :

| | |
|---|---|
| Elastomère | : 100 |
| Silice (*) | : 75 |
| Huile aromatique (d) | : 37,5 |

| | |
|---|---|
| Agent de liaison(**) | : 6 |
| Oxyde de zinc | : 2,5 |
| Acide stéarique | : 1,5 |
| Antioxydant (a) | : 1,9 |
| paraffine (b) | : 1,5 |
| Soufre | : 1,1 |
| Sulfénamide (c) | : 2 |
| Diphénylguanidine | : 1,5 |

(*) la silice est une silice hautement dispersible sous forme de microperles commercialisée par la Société Rhône Poulenc sous la dénomination commerciale Zeosil 1165 MP.

(**) organosilane polysulfuré commercialisé par la Société Degussa sous la dénomination SI69.

(a) : antioxydant : N-(1,3-diméthyl-butyl)-N'-phényl-p-phénylènediamine

(b) : paraffine : mélange de cires macro et microcristallines

(c) : Sulfénamide : N-cyclohexyl-2-benzothiazyl sulfénamide

(d) : Huile aromatique : ENERFLEX 65 commercialisée par la Société BP.

La vulcanisation est effectuée à 150°C pendant 40 minutes. On compare entre elles les propriétés de ces 7 compositions tant à l'état non vulcanisé qu'à l'état vulcanisé.

Les résultats sont consignés dans le tableau V

| TABLEAU V | | | | | | | |
|---|---|---|---|---|---|---|---|
| Compositions | SBR A | SBR A' | SBR B | SBR C | SBR D | SBR E | SBR T |
| Propriétés à l'état non vulcanisé | | | | | | | |
| Mooney | 88 | 90 | 92 | 92 | 90 | 68 | 76 |
| Propriétés à l'état vulcanisé | | | | | | | |
| dureté Shore | 65 | 65 | 66 | 65 | 64 | 66 | 66 |
| MA10 | 4.50 | 4.55 | 5.10 | 4.90 | 4.40 | 5.00 | 5.40 |
| MA100 | 1.62 | 1.65 | 1.70 | 1.70 | 1.60 | 1.65 | 1.75 |
| MA300 | 1.97 | 2.03 | 1.99 | 2.03 | 2.00 | 1.90 | 1.78 |
| MA300/ MA100 | 1.22 | 1.23 | 1.17 | 1.19 | 1.25 | 1.15 | 1.01 |
| Indices de cassage Scott à | | | | | | | |
| 20°C FR | 23,5 | 24 | 22.5 | 22 | 23 | 21.5 | 22 |
| 20°C AR % | 590 | 600 | 630 | 610 | 600 | 600 | 650 |
| 100°C FR | 9 | 9.1 | 8.9 | 8.2 | 8.8 | 8.5 | 8.5 |
| 100°CAR% | 400 | 400 | 420 | 380 | 390 | 400 | 450 |
| PH à 60°C* | 24,5 | 24.5 | 27 | 25 | 24 | 30 | 32 |
| Propriétés dynamiques en fonction de la déformation | | | | | | | |
| Δ G à 23°C | 2.20 | 2.25 | 3.30 | 2.70 | 2.10 | 3.30 | 4.50 |
| tgδ à 23°C | 0.27 | 0.27 | 0.31 | 0.29 | 0.26 | 0.31 | 0.39 |
| Propriétés dynamiques en fonction de la température | | | | | | | |
| tgδ 0°C | 0.54 | 0.54 | 0.54 | 0.54 | 0.54 | 0.54 | 0.52 |
| tgδ à 60°C | 0.140 | 0.140 | 0.150 | 0.145 | 0.140 | 0.155 | 0.180 |

(*) la déformation pour cette perte hystérétique est de 34 %.

On constate au niveau des propriétés à l'état vulcanisé, d'une part que globalement la résistance mécanique des compositions fonctionnalisées A et A' est très proche de celle de la composition D et légèrement supérieure à celle des compositions B et C, ce qui est favorable en matière de résistance à l'usure d'un pneumatique muni d'une bande de roulement constituée par une telle composition, et d'autre part que les propriétés hystérétiques tant aux fortes qu'aux faibles déformations sont améliorées par rapport à celles exhibées par les compositions B et C et très voisines de celles exhibées par la composition D, ce qui est favorable pour diminuer la résistance au roulement d'un pneumatique muni d'une bande de roulement constituée par une telle composition et pour constituer une sous couche de bande de roulement ou une gomme de flanc. On constate que les copolymères fonctionnalisés A et A' possèdent des propriétés nettement supérieures à celles du polymère SBRE étoilé à l'aide du GPTSI ainsi que du polymère SBRT stoppé au méthanol.

En d'autres termes, les polymères et copolymères fonctionnalisés avec un agent de fonctionnalisation répondant à la formule générale I, permettent d'obtenir des compositions ayant substantiellement les mêmes propriétés de caoutchouterie que celles obtenues avec une composition à base d'un polymère fonctionnalisé en laboratoire à l'aide de TMSI mais tout en ne conduisant pas à des évolutions de macrostructure lors de l'opération de stripping.

Exemple 6

Cet exemple a pour but de montrer que les propriétés améliorées sont obtenues quelle que soit la surface spécifique de la silice et quelle que soit sa forme de présentation.

Dans cet exemple on réalise deux séries d'essais, l'une mettant en oeuvre sous forme de microperles une silice précipitée ayant une surface spécifique BET de 85 m2/g commercialisée par la Société Rhône Poulenc sous la dénomination Zeosil 85 MP et l'autre mettant en oeuvre une silice précipitée se présentant sous forme de granulés et commercialisée par la société Degussa sous la dénomination commerciale Ultrasil VN3 et qui possède une surface spécifique CTAB de 170 m2/g.

Pour les deux séries d'essais, avec la formulation décrite à l'exemple 5, on réalise trois compositions avec les copolymères fonctionnalisés A et B préparés à l'exemple 4, la troisième composition étant réalisée avec le même copolymère SBRT non fonctionnalisé et servant de composition témoin.

Les résultats sont consignés dans le tableau VI.

| TABLEAU VI | | | | | | |
|---|---|---|---|---|---|---|
| | ZEOSIL 85 MP | | | ULTRASIL VN3 | | |
| Compositions | SBR A | SBR B | SBR T | SBR A | SBR B | SBR T |
| Propriétés à l'état non vulcanisé | | | | | | |
| Mooney | 66 | 72 | 57 | 86 | 92 | 71 |
| Propriétés à l'état vulcanisé | | | | | | |
| dureté Shore | 60 | 61 | 63 | 63 | 64 | 66 |
| MA10 | 3.60 | 3.80 | 4.00 | 4.20 | 4.90 | 5.20 |
| MA100 | 1.82 | 1.85 | 1.90 | 1.72 | 1.80 | 1.85 |
| MA300 | 2.93 | 2.86 | 2.75 | 2.03 | 2.01 | 1.87 |
| MA300/ MA100 | 1.61 | 1.55 | 1.45 | 1.18 | 1.12 | 1.01 |
| Indices de cassage Scott à | | | | | | |
| 20°C FR | 16,5 | 15.5 | 15 | 18,5 | 16.5 | 16 |
| 20°C AR % | 420 | 400 | 450 | 520 | 500 | 600 |
| 100°C FR | 5.5 | 5.1 | 4.8 | 7,0 | 6.5 | 6.0 |
| 100°C AR% | 230 | 200 | 260 | 330 | 300 | 330 |
| PH à 60°C | 14.5 | 15 | 19 | 20.5 | 24 | 29 |
| Propriétés dynamiques en fonction de la déformation | | | | | | |
| Δ G à 23°C | 1.00 | 1.20 | 1.60 | 1.50 | 1.70 | 2.70 |
| tgδ à 23°C | 0.15 | 0.16 | 0.20 | 0.21 | 0.23 | 0.30 |
| Propriétés dynamiques en fonction de la température | | | | | | |
| tgδ 0°C | 0.30 | 0,30 | 0,30 | 0.42 | 0.42 | 0.42 |
| tgδ à 60°C | 0.070 | 0.070 | 0,100 | 0.110 | 0.118 | 0.140 |

(*) La déformation pour cette perte hystérétique est respectivement de 37 % pour la silice Zeosil 85 MP et de 34 % pour la silice Ultrasil VN3.

On constate que quelle que soit la surface spécifique de la silice et quelle que soit sa forme de présentation, microperles ou granulés, les compositions mettant en oeuvre les copolymères fonctionnalisés A possèdent globalement des propriétés de renforcement (MA300/MA100) intéressantes et surtout des propriétés hystérétiques à fortes et à faibles déformations sensiblement améliorées par rapport à celles exhibées par les autres compositions. Ainsi, les compositions conformes à l'invention à base des polymères et copolymères fonctionnalisés avec un agent de fonctionnalisation répondant à la formule générale I sont particulièrement aptes à constituer des bandes de roulement et des pneus ayant des propriétés améliorées en matière de résistance à l'usure et de résistance au roulement.

Exemple 7

Cet exemple a pour but de montrer que les compositions mettant en oeuvre un polymère fonctionnalisé avec un agent de fonctionnalisation répondant à la formule générale I possèdent des propriétés améliorées lorsque la charge renforçante n'est pas exclusivement constituée par de la silice mais par exemple par un coupage noir/silice. Dans cet exemple, on utilise la formulation suivante tout en répétant le mode opératoire de l'exemple 5.

| | |
|---|---|
| Elastomère | 100 |
| Silice (*) | 40 |
| Noir N234 | 40 |
| Huile aromatique (d) | 37.5 |
| Agent de liaison (**) | 3.2 |
| Oxyde de zinc | 2.5 |
| Acide stéarique | 1.5 |
| Antioxydant (a) | 1.9 |
| Paraffine (b) | 1.5 |
| Soufre | 1.1 |
| Sulfénamide (c) | 2 |
| Diphénylguanidine | 0,75 |

(*),(**), (a), (b), (c), (d) : identiques à ceux utilisés dans l'exemple 5

Les résultats sont consignés dans le tableau VII.

TABLEAU VII

| Compositions | SBR A | SBR B | SBR T |
|---|---|---|---|
| Propriétés à l'état cru | | | |
| Mooney | 83 | 86 | 72 |
| Propriétés à l'état vulcanisé | | | |
| Dureté Shore | 61 | 63 | 64 |
| MA10 | 3.90 | 4.10 | 4.55 |
| MA100 | 1.51 | 1.51 | 1.50 |
| MA300 | 1.93 | 1.89 | 1.74 |
| MA300/MA100 | 1.28 | 1.24 | 1.16 |
| Indice de cassage Scott à | | | |
| 20°C FR | 20 | 20.5 | 19 |
| 20°C AR % | 600 | 610 | 620 |
| 100°C FR | 10.5 | 9.9 | 9.5 |
| 100°C AR % | 450 | 450 | 500 |
| PH à 60°C * | 32.5 | 33.5 | 39 |
| Propriétés dynamiques en fonction de la déformation | | | |
| ΔG à 23°C | 3.40 | 4.40 | 6.30 |
| tgδ à 23°C | 0.35 | 0.38 | 0.43 |
| Propriétés dynamiques en fonction de la température | | | |
| tgδ à 0°C | 0.70 | 0.70 | 0.67 |
| tgδ à 60°C | 0.180 | 0.200 | 0.220 |

(*) la déformation pour cette perte hystérétique est de 35 %.

On constate que les propriétés de la composition comprenant le polymère fonctionnalisé à l'aide du composé répondant à la formule générale I sont, dans le cas d'un coupage noir-silice, améliorées par rapport à celles des autres compositions.

**Revendications**

1. Procédé de préparation de polymères diéniques fonctionnalisés à l'aide d'un composé alcoxysilane époxydé consistant à préparer par catalyse un polymère diénique vivant et caractérisé en ce qu'on ajoute par mélangeage au polymère vivant un agent de fonctionnalisation répondant à la formule générale :

$$(Y)_m\text{-}R^1\text{-}Si(OR^2)_{3-n}\text{-}R^3n$$

dans laquelle :

Y représente les restes

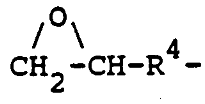 ou 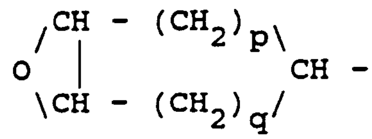

$R^1$ représente un reste alcoyle, cycloalcoyle ou aryle ayant de 1 à 10 atomes de carbone,
$R^2$ représente un reste alcoyle, aryle, cycloalcoyle, alkaryle, aralkyle ayant de 1 à 12 atomes de carbone,
$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,
n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4 étant entendu que la somme p + q doit représenter un nombre entier compris entre 2 et 5 inclusivement,
en une quantité telle que le rapport molaire (RM) agent de fonctionnalisation sur nombre de sites actifs de l'initiateur soit égal ou supérieur à 1 ,
en ce que le mélangeage est approprié pour atteindre le niveau de micro-mélange le plus élevé avant que les 2 constituants puissent significativement réagir entre eux en quantité appréciable et tel qu'il ne permette d'obtenir substantiellement que la réaction d'un seul site réactif du polymère vivant avec un seul groupement $SiOR^2$ de l'agent de fonctionnalisation et en ce qu'on récupère le polymère fonctionnalisé.

2. Procédé selon la revendication 1, caractérisé en ce que le polymère fonctionnalisé satisfait simultanément aux 2 rapports :

$$PF = \frac{Ns}{Np \times (fn)} \geq 0{,}85 \text{ et } PV = \frac{Ne}{Ns \times m} \geq 0{,}90$$

dans lesquels :

Ns représente le nombre de moles de silicium liées à une extrémité de chaîne polymérique du polymère fonctionnalisé,
Np représente le nombre de moles de polymère avant fonctionnalisation,
f(n) représente la fonctionnalité de l'initiateur de polymérisation,
Ne représente le nombre de moles de fonction époxy liée à une extrémité de chaîne polymérique du polymère fonctionnalisé
m a la signification indiquée précédemment.

3. Procédé selon l'une quelconque des revendications 1 et 2, caractérisé en ce que le temps caractéristique de mélangeage de l'agent de fonctionnalisation avec le polymère vivant est inférieur ou égal et de préférence très inférieur au temps caractéristique de réaction entre les deux constituants et en outre inférieur et de préférence très inférieur au temps caractéristique de diffusion moléculaire des constituants.

4. Procédé selon l'une quelconque des revendications 1 à 3, caractérisé en ce que la réaction entre le polymère vivant et le composé de fonctionnalisation est effectuée à une température inférieure à 120°C et de préférence comprise entre 30°C et 90°C.

5. Procédé selon l'une quelconque des revendications 1 à 4, caractérisé en ce que le polymère fonctionnalisé est

soumis à un stripping.

6. Polymères diéniques fonctionnalisés ayant de 70 % à 100 % de molécules répondant à la formule :

(Y)m-$R^1$-Si($OR^2$)$_2$-P lorsque l'initiateur de polymérisation est monofonctionnel, ou de 60 % à 100 % d'extrémités de chaînes polymériques répondant à la formule
(Y)m-$R^1$-Si($OR^2$)$_2$-P' lorsque l'initiateur de polymérisation est polyfonctionnel
dans lesquelles :
Y, $R^1$, $R^2$ et m ont les mêmes significations qu'à la revendication 1,
P et P' représentent la chaîne d'un homopolymère du 1,3-butadiène, du 2,3-di(C1 à C5 alcoyle)-1,3-butadiène, d'un aryle-1,3-butadiène, du 1,3-pentadiène, du 2,4-hexadiène ou d'un copolymère d'au moins deux diènes conjugués monomères choisis dans le groupe constitué par le 1,3-butadiène, le 2-méthyl-1,3-butadiène, le 2,3-di($C_1$à $C_5$ alcoyle)-1,3-butadiène, d'un aryle-1,3-butadiène, le 1,3-pentadiène, le 2,4-hexadiène ou un copolymère d'un ou plusieurs composés diène conjugué choisi dans le groupe constitué par le 1,3-butadiène, le 2-méthyl-1,3-butadiène, le 2,3-di($C_1$ à $C_5$ alcoyle)-1,3 butadiène, d'un aryle-1,3-butadiène, le 1,3-pentadiène, le 2,4-hexadiène avec un ou plusieurs composés vinyle aromatique et présentant une viscosité Mooney comprise entre 10 et 150.

7. Polymères selon la revendication 6, caractérisés en ce que la chaîne polymérique représente celle d'un polybutadiène ou d'un copolymère butadiène-styrène ou d'un terpolymère butadiène-styrène-isoprène.

8. Composition de caoutchouc vulcanisable au souffle à base d'un polymère diénique fonctionnalisé caractérisée en ce qu'elle comprend de la silice à titre de charge renforçante et en ce que le polymère diénique est un polymère fonctionnalisé avec un agent de fonctionnalisation répondant à la formule générale :

$$(Y)_m\text{-}R^1\text{-}Si(OR^2)_{3\text{-}n\text{-}}R^3n$$

dans laquelle :

Y représente les restes

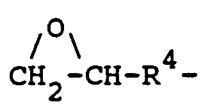 ou 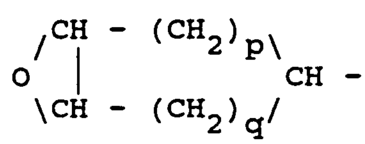

$R^1$ représente un reste alcoyle, cycloalcoyle ou aryle ayant de 1 à 10 atomes de carbone,
$R^2$ représente un reste alcoyle, aryle, cycloalcoyle, alkaryle, aralkyle ayant de 1 à 12 atomes de carbone,
$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,
n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4, étant entendu que la somme p + q doit représenter un nombre entier compris entre 2 et 5 inclusivement,
qui satisfait simultanément aux 2 rapports :

$$PF = \frac{Ns}{Np \times (fn)} \geq 0,85 \text{ et } PV = \frac{Ne}{Ns \times m} \geq 0,90$$

dans lesquels :

Ns représente le nombre de moles de silicium liées à une extrémité de chaîne polymérique du polymère fonctionnalisé,
Np représente le nombre de moles de polymère avant fonctionnalisation,
f(n) représente la fonctionnalité de l'initiateur de polymérisation,
Ne représente le nombre de moles de fonction époxy liée à une extrémité de chaîne polymérique du polymère fonctionnalisé
m a la signification indiquée précédemment.

**9.** Composition selon la revendication 8, caractérisée en ce que le polymère fonctionnalisé comporte 80 % à 100 % de chaînes fonctionnalisées.

**10.** Composition de caoutchouc selon la revendication 8, caractérisée en ce que l'agent de fonctionnalisation est choisi parmi le 3-glycidyloxypropyltriméthoxysilane et le 2-(3,4-époxycylohexyl)-éthyltriméthoxysilane.

**11.** Composition selon la revendication 8, caractérisée en ce que la silice est une silice de précipitation présentant une surface BET inférieure ou égale à 450 m2/g et une surface spécifique CTAB inférieure ou égale à 450 m2/g.

**12.** Composition selon la revendication 11, caractérisée en ce que la silice est une silice hautement dispersible se présentant sous forme de poudre, microperles, billes, granulés.

**13.** Composition selon l'une quelconque des revendication 8 à 12, caractérisée en ce que le polymère diénique fonctionnalisé est choisi dans le groupe constitué par le polybutadiène, le copolymère butadiène-styrène ou butadiène-styrène-isoprène.

**14.** Composition selon la revendication 13, caractérisée en ce que le copolymère butadiène-styrène possède me teneur en liaisons-1,2 comprise entre 4 % et 65 %.

**15.** Composition selon l'me quelconque des revendications 8 à 14, caractérisée en ce qu'eue comprend de 1 à 70 parties en poids d'au moins m autre élastomère diénique choisi dans le groupe constitué par le caoutchouc naturel, le polybutadiène, le polyisoprène, le butadiène-styrène, le butadiène-styrène-isoprène.

**16.** Composition selon l'me quelconque des revendications 8 à 15, caractérisée a ce qu'eue comporte en outre du noir de carbone.

**17.** Composition selon la revendication 16, caractérisée en ce que la quantité de noir de carbone est ≦ à 200 % par rapport à la quantité de silice présente.

**18.** Bande de roulement de pneumatique caractérisée en ce qu'elle comprend de la silice à titre de charge renforçante et un polymère diénique fonctionnalisé avec un agent de fonctionnalisation répondant à la formule générale :

$$(Y)_m\text{-}R^1\text{-}Si(OR^2)_{3\text{-}n\text{-}}R^3n$$

dans laquelle

Y représente les restes

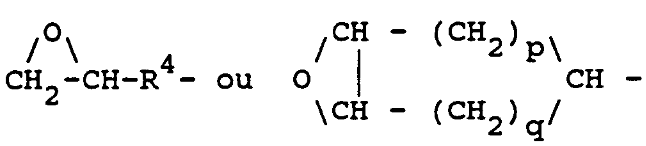

$R^1$ représente un reste alcoyle, cycloalcoyle ou aryle ayant de 1 à 10 atomes de carbone,
$R^2$ représente un reste alcoyle aryle, cycloalcoyle, alkaryle, aralkyle ayant de 1 à 12 atomes de carbone,

$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,
n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4 étant entendu que la somme p + q doit représenter un nombre entier compris entre 2 et 5 inclusivement,
qui satisfait simultanément aux 2 rapports :

$$PF = \frac{Ns}{Np \times (fn)} \geq 0,85 \text{ et } PV = \frac{Ne}{Ns \times m} \geq 0,90$$

dans lesquels :
Ns représente le nombre de moles de silicium liées à une extrémité de chaîne polymérique du polymère fonctionnalisé,
Np représente le nombre de moles de polymère avant fonctionnalisation,
f(n) représente la fonctionnalité de l'initiateur de polymérisation,
Ne représente le nombre de moles de fonction époxy liée à une extrémité de chaîne polymérique du polymère fonctionnalisé
m a la signification indiquée précédemment.

**19.** Bande de roulement de pneumatique selon la revendication 18, caractérisée en ce que l'agent de fonctionnalisation est choisi parmi le 3-glycidyloxypropyltriméthoxysilane et le 2-(3,4-époxycyclohexyl)-éthyltriméthoxysilane.

**20.** Bande de roulement de pneumatique selon l'une quelconque des revendications 18 ou 19, caractérisée en ce que la silice est une silice de précipitation présentant une surface BET inférieure ou égale à 450 m2/g, une surface spécifique CTAB inférieure ou égale à 450 m2/g et de préférence hautement dispersible.

**21.** Bande de roulement de pneumatique selon l'une quelconque des revendications 18 à 20, caractérisée en ce que le polymère diénique fonctionnalisé est choisi dans le groupe constitué par le polybutadiène, le copolymère butadiène-styrène ou butadiène-styrène-isoprène.

**22.** Bande de roulement de pneumatique selon la revendication 21, caractérisée en ce que le copolymère butadiène-styrène possède une teneur en liaisons-1,2 comprise entre 4 % et 65 %.

**23.** Pneumatique ayant une résistance au roulement réduite, caractérisé en ce qu'il possède une bande de roulement comprenant de la silice à titre de charge renforçante et un polymère diénique fonctionnalisé avec un agent de fonctionnalisation répondant à la formule générale :

$$(Y)_m\text{-}R^1\text{-}Si(OR^2)_{3-n}\text{-}R^3n$$

dans laquelle

Y représente les restes

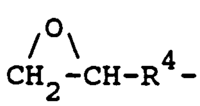 ou 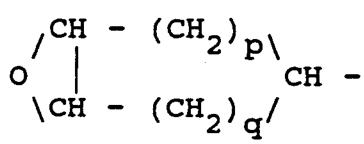

$R^1$ représente un reste alcoyle, cycloalcoyle ou aryle ayant de 1 à 10 atomes de carbone,
$R^2$ représente un reste alcoyle aryle, cycloalcoyle, alkaryle, aralkyle ayant de 1 à 12 atomes de carbone,

$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,
n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4 étant entendu que la somme p + q doit représenter un nombre entier compris entre 2 et 5 inclusivement,
qui satisfait simultanément aux 2 rapports :

$$PF = \frac{Ns}{Np \times (fn)} \geq 0,85 \text{ et } PV = \frac{Ne}{Ns \times m} \geq 0,90$$

dans lesquels :
Ns représente le nombre de moles de silicium liées à une extrémité de chaîne polymérique du polymère fonctionnalisé,
Np représente le nombre de moles de polymère avant fonctionnalisation,
f(n) représente la fonctionnalité de l'initiateur de polymérisation,
Ne représente le nombre de moles de fonction époxy liée à une extrémité de chaîne polymérique du polymère fonctionnalisé
m a la signification indiquée précédemment.

**24.** Procédé pour réduire l'hystérèse de compositions vulcanisées à base de polymères, caractérisé en ce qu'il consiste à ajouter par mélangeage à un polymère diénique, un composé de formule générale $(Y)_m$-$R^1$- $Si(OR^2)_{3-n}$-$R^3$n dans laquelle Y, $R^1$, $R^2$, $R^3$, n, m p et q ont les mêmes significations qu'à la revendication 1, en une quantité telle que le rapport molaire (RM) agent de fonctionnalisation sur nombre de sites actifs soit égal ou supérieur à 1, à récupérer le polymère modifié, à ajouter de la silice et les autres ingrédients habituels pour former une composition vulcanisable au souffle et à vulcaniser la composition.

## Claims

**1.** A process of preparing diene polymers functionalised by means of an epoxidised alkoxysilane compound, consisting in preparing, by catalysis, a living diene polymer and characterised in that there is added, by mixing, to the living polymer a functionalising agent having the general formula:

$$(Y)_m\text{-}R^1\text{-}Si(OR^2)_{3-n}\text{-}R^3n$$

in which

Y represents the radicals

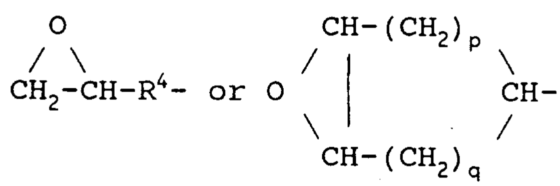

$R^1$ represents an alkyl, cycloalkyl or aryl radical having from 1 to 10 carbon atoms,
$R^2$ represents an alkyl, aryl, cycloalkyl, alkaryl or aralkyl radical having from 1 to 12 carbon atoms,
$R^3$ represents an alkyl, aryl or alkaryl radical having from 1 to 12 carbon atoms,
$R^4$ represents a hydrocarbon radical having from 1 to 6 carbon atoms and which may comprise one or more oxygen atoms in the hydrocarbon chain,
n is a whole number selected from among the values 0 and 1,

m is a whole number selected from among the values 1 and 2,

p and q are whole numbers selected from among the values 0, 1, 2, 3 and 4, it being understood that the sum of p + q must represent a whole number between 2 and 5 inclusive,

in a quantity such that the molar ratio (MR) of functionalising agent to number of active sites of the initiator is equal to or greater than 1, in that the mixing is suitable to achieve the highest level of micromixture before the two components can significantly react with each other in appreciable amount and such as substantially to permit only the reaction of a single reactive site of the living polymer with a single $SiOR^2$ group of the functionalising agent, and that the functionalised polymer is recovered.

**2.** A process according to Claim 1, characterised in that the functionalised polymer simultaneously satisfies the two relationships:

$$PF = \frac{Ns}{Np \times (fn)} \geq 0.85 \text{ and } PV = \frac{Ne}{Ns \times m} \geq 0.90$$

in which:

Ns represents the number of moles of silicon bound to one polymer chain end of the functionalised polymer,
Np represents the number of moles of polymer before functionalisation,
f(n) represents the functionality of the polymerisation initiator,
Ne represents the number of moles of epoxy function bound to a polymer chain end of the functionalised polymer,
m has the meaning indicated above.

**3.** A process according to any one of Claims 1 and 2, characterised in that the characteristic mixing time of the functionalising agent with the living polymer is less than or equal to, and preferably far less than, the characteristic time of reaction between the two components and furthermore less than and preferably much less than the characteristic time of molecular diffusion of the components.

**4.** A process according to any one of Claims 1 to 3, characterised in that the reaction between the living polymer and the functionalisation compound is effected at a temperature below 120°C and preferably between 30°C and 90°C.

**5.** A process according to any one of Claims 1 to 4, characterised in that the functionalised polymer is subjected to stripping.

**6.** Functionalised diene polymers having 70% to 100% of molecules having the formula:

$(Y)_m$-$R^1$-$Si(OR^2)_2$-P when the polymerisation initiator is monofunctional, or 60% to 100% of polymer chain ends having the formula
$(Y)_m$-$R^1$-$Si(OR^2)_2$-P' when the polymerisation initiator is polyfunctional
in which:
Y, $R^1$, $R^2$ and m have the same meanings as in Claim 1,
P and P' represent the chain of a homopolymer of 1,3-butadiene, 2,3-di(C1 to C5 alkyl)-1,3-butadiene, an aryl-1,3-butadiene, 1,3-pentadiene, 2,4-hexadiene or a copolymer of at least two monomeric conjugated dienes selected from the group consisting of 1,3-butadiene, 2-methyl-1,3-butadiene, 2,3-di($C_1$ to $C_5$ alkyl)-1,3-butadiene, an aryl 1,3-butadiene, 1,3-pentadiene and 2,4-hexadiene, or a copolymer of one of more conjugated diene compounds selected from the group consisting of 1,3-butadiene, 2-methyl-1,3-butadiene, 2,3-di($C_1$ to $C_5$ alkyl)-1,3-butadiene, an aryl 1,3-butadiene, 1,3-pentadiene and 2,4-hexadiene with one or more aromatic vinyl compounds and having a Mooney viscosity of between 10 and 150.

**7.** Polymers according to Claim 6, characterised in that the polymer chain represents that of a polybutadiene or of a butadiene-styrene copolymer or of a butadiene-styrene-isoprene terpolymer.

**8.** A sulphur-vulcanisable rubber composition having the base of a functionalised diene polymer, characterised in that it comprises silica as reinforcing filler and in that the diene polymer is a polymer functionalised with a functionalising agent having the general formula:

$$(Y)_m\text{-}R^1\text{-}Si(OR^2)_{3-n}\text{-}R^3n$$

in which

Y represents the radicals

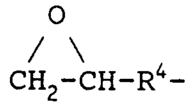 or 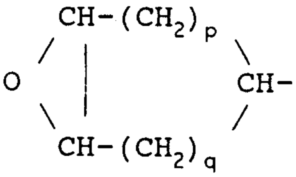

$R^1$ represents an alkyl, cycloalkyl or aryl radical having from 1 to 10 carbon atoms,
$R^2$ represents an alkyl, aryl, cycloalkyl, alkaryl or aralkyl radical having from 1 to 12 carbon atoms,
$R^3$ represents an alkyl, aryl or alkaryl radical having from 1 to 12 carbon atoms,
$R^4$ represents a hydrocarbon radical having from 1 to 6 carbon atoms and which may comprise one or more oxygen atoms in the hydrocarbon chain,
n is a whole number selected from among the values 0 and 1,
m is a whole number selected from among the values 1 and 2,
p and q are whole numbers selected from among the values 0, 1, 2, 3 and 4, it being understood that the sum of p + q must represent a whole number between 2 and 5 inclusive,
which simultaneously satisfies the two relationships:

$$PF = \frac{Ns}{Np \times (fn)} \geq 0.85 \text{ and } PV = \frac{Ne}{Ns \times m} \geq 0.90$$

in which:
Ns represents the number of moles of silicon bound to one polymer chain end of the functionalised polymer,
Np represents the number of moles of polymer before functionalisation,
f(n) represents the functionality of the polymerisation initiator,
Ne represents the number of moles of epoxy function bound to a polymer chain end of the functionalised polymer,
m has the meaning indicated above.

**9.** A composition according to Claim 8, characterised in that the functionalised polymer comprises 80% to 100% of functionalised chains.

**10.** A rubber composition according to Claim 8, characterised in that the functionalising agent is selected from among 3-glycidoxypropyltrimethoxysilane and 2-(3,4-epoxycyclohexyl)ethyltrimethoxysilane.

**11.** A composition according to Claim 8, characterised in that the silica is a precipitation silica having a BET surface area which is less than or equal to 450 $m^2/g$, and a specific CTAB surface area which is less than or equal to 450 $m^2/g$.

**12.** A composition according to Claim 11, characterised in that the silica is a highly dispersible silica in the form of powder, microbeads, balls or granules.

**13.** A composition according to any one of Claims 8 to 12, characterised in that the functionalised diene polymer is selected from the group consisting of polybutadiene, butadiene-styrene copolymer or butadiene-styrene-isoprene copolymer.

**14.** A composition according to Claim 13, characterised in that the butadiene-styrene copolymer has a content of 1,2 bonds of between 4% and 65%.

**15.** A composition according to any one of Claims 8 to 14, characterised in that it comprises from 1 to 70 parts by weight of at least one other diene elastomer selected from the group consisting of natural rubber, polybutadiene, polyisoprene, butadiene-styrene and butadiene-styrene-isoprene.

**16.** A composition according to any one of Claims 8 to 15, characterised in that it furthermore comprises carbon black.

**17.** A composition according to Claim 16, characterised in that the amount of carbon black is ≤ 200% relative to the amount of silica present.

**18.** A tyre tread, characterised in that it comprises silica as reinforcing filler and a diene polymer functionalised with a functionalising agent having the general formula

$$(Y)_m\text{-}R^1\text{-}Si(OR^2)_{3-n}R^3n$$

in which

Y represents the radicals

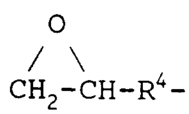

or

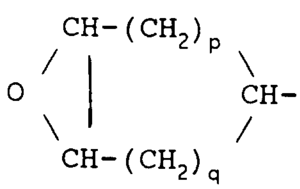

$R^1$ represents an alkyl, cycloalkyl or aryl radical having from 1 to 10 carbon atoms,
$R^2$ represents an alkyl, aryl, cycloalkyl, alkaryl or aralkyl radical having from 1 to 12 carbon atoms,
$R^3$ represents an alkyl, aryl or alkaryl radical having from 1 to 12 carbon atoms,
$R^4$ represents a hydrocarbon radical having from 1 to 6 carbon atoms and which may comprise one or more oxygen atoms in the hydrocarbon chain,
n is a whole number selected from among the values 0 and 1,
m is a whole number selected from among the values 1 and 2,
p and q are whole numbers selected from among the values 0, 1, 2, 3 and 4, it being understood that the sum of p + q must represent a whole number between 2 and 5 inclusive,
which simultaneously satisfies the two relationships:

$$PF = \frac{Ns}{Np \times (fn)} \geq 0.85 \text{ and } PV = \frac{Ne}{Ns \times m} \geq 0.90$$

in which:
Ns represents the number of moles of silicon bound to one polymer chain end of the functionalised polymer,
Np represents the number of moles of polymer before functionalisation,
f(n) represents the functionality of the polymerisation initiator,
Ne represents the number of moles of epoxy function bound to a polymer chain end of the functionalised polymer,
m has the meaning indicated above.

**19.** A tyre tread according to Claim 18, characterised in that the functionalising agent is selected from among 3-glycidoxypropyltrimethoxysilane and 2-(3,4-epoxycyclohexyl)ethyltrimethoxysilane.

**20.** A tyre tread according to any one of Claims 18 or 19, characterised in that the silica is a precipitation silica having a BET surface area which is less than or equal to 450 $m^2/g$, and a specific CTAB surface area which is less than or equal to 450 $m^2/g$ and preferably highly dispersible.

**21.** A tyre tread according to any one of Claims 18 to 20, characterised in that the functionalised diene polymer is selected from among the group consisting of polybutadiene, butadiene-styrene copolymer or butadiene-styrene-isoprene copolymer.

**22.** A tyre tread according to Claim 21, characterised in that the butadiene-styrene copolymer has a content of 1,2 bonds of between 4% and 65%.

**23.** A tyre having a reduced resistance to rolling, characterised in that it has a tread comprising silica as reinforcing filler and a diene polymer functionalised with a functionalising agent having the general formula

$$(Y)_m\text{-}R^1\text{-}Si(OR^2)_{3\text{-}n}\text{-}R^3n$$

in which

Y represents the radicals

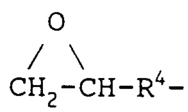 or 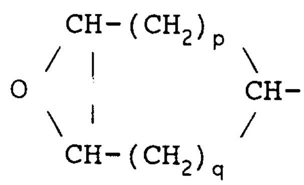

$R^1$ represents an alkyl, cycloalkyl or aryl radical having from 1 to 10 carbon atoms,
$R^2$ represents an alkyl, aryl, cycloalkyl, alkaryl or aralkyl radical having from 1 to 12 carbon atoms,
$R^3$ represents an alkyl, aryl or alkaryl radical having from 1 to 12 carbon atoms,
$R^4$ represents a hydrocarbon radical having from 1 to 6 carbon atoms and which may comprise one or more oxygen atoms in the hydrocarbon chain,
n is a whole number selected from among the values 0 and 1,
m is a whole number selected from among the values 1 and 2,
p and q are whole numbers selected from among the values 0, 1, 2, 3 and 4, it being understood that the sum of p + q must represent a whole number between 2 and 5 inclusive,
which simultaneously satisfies the two relationships:

$$PF = \frac{Ns}{Np \times (fn)} \geq 0.85 \text{ and } PV = \frac{Ne}{Ns \times m} \geq 0.90$$

in which:
Ns represents the number of moles of silicon bound to one polymer chain end of the functionalised polymer,
Np represents the number of moles of polymer before functionalisation,
f(n) represents the functionality of the polymerisation initiator,
Ne represents the number of moles of epoxy function bound to a polymer chain end of the functionalised polymer,
m has the meaning indicated above.

**24.** A process of reducing the hysteresis of vulcanised compositions having a base of polymers, characterised in that it consists of adding to a diene polymer, by mixing, a compound of the general formula $(Y)_m\text{-}R^1\text{-}Si(OR^2)_{3\text{-}n}R^3n$, in which Y, $R^1$, $R^2$, $R^3$, n, m, p and q have the same meaning as in Claim 1, in an amount such that the molar ratio (MR) of functionalising agent to number of active sites is equal to or greater than 1, recovering the modified polymer, adding silica and the other customary ingredients to form a sulphur-vulcanisable composition, and vulcanising the composition.

**Patentansprüche**

1. Verfahren zur Herstellung von Dienpolymeren, die mit einer epoxygruppenhaltigen Alkoxysilanverbindung funktionalisiert sind,
das darin besteht, durch Katalyse ein lebendes Dienpolymer herzustellen,
gekennzeichnet durch

    - Zusatz eines Funktionalisierungsmittels der allgemeinen Formel

    $$(Y)_m\text{-}R^1\text{-}Si(OR^2)_{3\text{-}n}\text{-}R^3{}_n,$$

    in der bedeuten:

    Y den Rest

    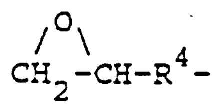 oder 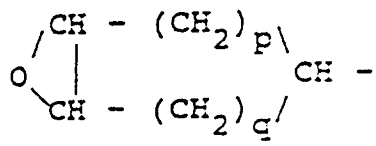 ,

    $R^1$ Alkyl, Cycloalkyl oder Aryl mit 1 bis 10 C-Atomen,
    $R^2$ Alkyl, Aryl, Cycloalkyl, Alkaryl oder Aralkyl mit 1 bis 12 C-Atomen,
    $R^3$ Alkyl, Aryl oder Alkaryl mit 1 bis 12 C-Atomen,
    $R^4$ einen Kohlenwasserstoffrest mit 1 bis 6 C-Atomen, der ein oder mehrere Sauerstoffatome in der Kohlenwasserstoffkette enthalten kann,
    n 0 oder 1,
    m 1 oder 2 und
    p und q 0, 1, 2, 3 oder 4 mit der Maßgabe, daß die Summe p + q eine ganze Zahl im Bereich von einschließlich 2 bis einschließlich 5 ist,
    zum lebenden Polymer durch Mischen in einer solchen Menge, daß das Molverhältnis (MV) von Funktionalisierungsmittel zu Anzahl aktiver Stellen des Initiators ≥ 1 ist,

    - Vornahme des Mischens in geeigneter Weise so, daß die höchste Mikrovermischung erzielt wird, bevor die beiden Bestandteile in nennenswerter Menge signifikant miteinander reagieren konnten, und so, daß im wesentlichen nur die Reaktion einer einzigen reaktiven Stelle des lebenden Polymers mit einer einzigen Gruppe $SiOR^2$ des Funktionalisierungsmittels erzielt werden kann,
    und

    - Gewinnung des funktionalisierten Polymers.

2. Verfahren nach Anspruch 1, dadurch gekennzeichnet, daß bei dem funktionalisierten Polymer gleichzeitig die beiden Beziehungen

$$PF = \frac{Ns}{Np \times (fn)} \geq 0{,}85 \quad \text{und} \quad PV = \frac{Ne}{Ns \times m} \geq 0{,}90$$

erfüllt sind,
worin bedeuten:

Ns die Anzahl der Mole Silicium, die an einem Ende der Polymerkette des funktionalisierten Polymers gebunden sind,

| | |
|---|---|
| Np | die Anzahl der Mole Polymer vor der Funktionalisierung, |
| f(n) | die Funktionalität des Polymerisationsinitiators, |
| Ne | die Anzahl der Mole Epoxyfunktion, die an einem Ende der Polymerkette des funktionalisierten Polymers gebunden ist, und |
| m | dasselbe wie oben angegeben. |

**3.** Verfahren nach Anspruch 1 oder 2, dadurch gekennzeichnet, daß die charakteristische Zeitdauer des Mischens des Funktionalisierungsmittels mit dem lebenden Polymer höchstens gleich der charakteristischen Zeitdauer der Reaktion zwischen den beiden Bestandteilen und vorzugsweise sehr viel kleiner ist und ferner kleiner und vorzugsweise sehr viel kleiner ist als die charakteristische Zeitdauer der molekularen Diffusion der Bestandteile.

**4.** Verfahren nach einem der Ansprüche 1 bis 3, dadurch gekennzeichnet, daß die Reaktion zwischen dem lebenden Polymer und dem Funktionalisierungsmittel bei einer Temperatur unter 120 °C und vorzugsweise bei einer Temperatur im Bereich von 30 bis 90 °C durchgeführt wird.

**5.** Verfahren nach einem der Ansprüche 1 bis 4, dadurch gekennzeichnet, daß das funktionalisierte Polymer einem Strippen unterworfen wird.

**6.** Funktionalisierte Dienpolymere, bei denen 70 bis 100 % der Moleküle die Formel $(Y)_m$-$R^1$-$Si(OR^2)_2$-P aufweisen, wenn der Polymerisationsinitiator monofunktionell ist,
oder bei denen 60 bis 100 % der Enden der Polymerketten die Formel $(Y)_m$-$R^1$-$Si(OR^2)_2$-P' aufweisen, wenn der Polymerisationsinitiator polyfunktionell ist,
wobei in den Formeln bedeuten:

| | |
|---|---|
| Y, $R^1$, $R^2$ und m | dasselbe wie in Anspruch 1 und |
| P und P' | die Kette eines Homopolymers von 1,3-Butadien, einem 2,3-Di($C_{1-5}$-alkyl)-1,3-butadien, eines Aryl-1,3-butadiens, von 1,3-Pentadien oder von 2,4-Hexadien oder die Kette eines Copolymers von mindestens zwei monomeren konjugierten Dienen, die ausgewählt sind unter 1,3-Butadien, 2-Methyl-1,3-butadien, 2,3-Di($C_{1-5}$-alkyl)-1,3-butadienen, Aryl-1,3-butadienen, 1,3-Pentadien und 2,4-Hexadien, oder die Kette eines Copolymers von einer oder mehreren konjugierten Dienverbindungen, die unter 1,3-Butadien, 2-Methyl-1,3-butadien, 2,3-Di($C_{1-5}$-alkyl)-1,3-butadienen, Aryl-1,3-butadienen, 1,3-Pentadien und 2,4-Hexadien ausgewählt sind, mit einer oder mehreren aromatischen Vinylverbindungen, |

wobei die Dienpolymeren eine Mooney-Viskosität von 10 bis 150 aufweisen.

**7.** Polymere nach Anspruch 6, dadurch gekennzeichnet, daß die Polymerkette die Polymerkette eines Polybutadiens oder eines Butadien-Styrol-Copolymers oder eines Butadien-Styrol-Isopren-Terpolymers darstellt.

**8.** Mit Schwefel vulkanisierbare Kautschukzusammensetzung auf der Basis eines funktionalisierten Dienpolymers, dadurch gekennzeichnet, daß sie als verstärkenden Füllstoff Kieselsäure enthält und das Dienpolymer ein Polymer ist, das mit einem Funktionalisierungsmittel der allgemeinen Formel

$$(Y)_m\text{-}R^1\text{-}Si(OR^2)_{3-n}\text{-}R^3_n$$

funktionalisiert ist,
in der bedeuten:

Y den Rest

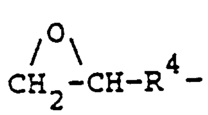 oder 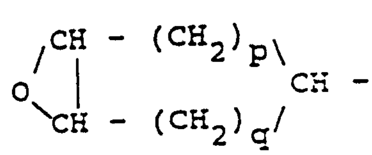 ,

$R^1$ Alkyl, Cycloalkyl oder Aryl mit 1 bis 10 C-Atomen,
$R^2$ Alkyl, Aryl, Cycloalkyl, Alkaryl oder Aralkyl mit 1 bis 12 C-Atomen,
$R^3$ Alkyl, Aryl oder Alkaryl mit 1 bis 12 C-Atomen,
$R^4$ einen Kohlenwasserstoffrest mit 1 bis 6 C-Atomen, der ein oder mehrere Sauerstoffatome in der Kohlenwasserstoffkette enthalten kann,
n 0 oder 1,
m 1 oder 2
und
p und q 0, 1, 2, 3 oder 4 mit der Maßgabe, daß die Summe p + q eine ganze Zahl im Bereich von einschließlich 2 bis einschließlich 5 ist,

wobei das Dienpolymer gleichzeitig die beiden Beziehungen

$$PF = \frac{Ns}{Np \times (fn)} \geq 0{,}85 \quad \text{und} \quad PV = \frac{Ne}{Ns \times m} \geq 0{,}90$$

erfüllt,
worin bedeuten:

Ns die Anzahl der Mole Silicium, die an einem Ende der Polymerkette des funktionalisierten Polymers gebunden sind,
Np die Anzahl der Mole Polymer vor der Funktionalisierung,
f(n) die Funktionalität des Polymerisationsinitiators,
Ne die Anzahl der Mole Epoxyfunktion, die an einem Ende der Polymerkette des funktionalisierten Polymers gebunden ist,
und
m dasselbe wie oben angegeben.

**9.** Kautschukzusammensetzung nach Anspruch 8, dadurch gekennzeichnet, daß das funktionalisierte Polymer 80 bis 100 % funktionalisierte Ketten aufweist.

**10.** Kautschukzusammensetzung nach Anspruch 8, dadurch gekennzeichnet, daß das Funktionalisierungsmittel unter 3-Glycidyloxypropyltrimethoxysilan und 2-(3,4-Epoxycyclohexyl)-ethyltrimethoxysilan ausgewählt ist.

**11.** Kautschukzusammensetzung nach Anspruch 8, dadurch gekennzeichnet, daß die Kieselsäure eine gefällte Kieselsäure ist, die eine BET-Oberfläche $\leq 450\ m^2/g$ und eine spezifische CTAB-Oberfläche $\leq 450\ m^2/g$ aufweist.

**12.** Kautschukzusammensetzung nach Anspruch 11, dadurch gekennzeichnet, daß die Kieselsäure eine hoch dispergierbare Kieselsäure ist, die in Form eines Pulvers, von Mikroperlen oder Kügelchen oder in Form eines Granulats vorliegt.

**13.** Kautschukzusammensetzung nach einem der Ansprüche 8 bis 12, dadurch gekennzeichnet, daß das funktionalisierte Dienpolymer unter Polybutadien, Butadien-Styrol-Copolymeren und Butadien-Styrol-Isopren-Copolymeren ausgewählt ist.

**14.** Kautschukzusammensetzung nach Anspruch 13, dadurch gekennzeichnet, daß das Butadien-Styrol-Copolymer einen Gehalt an 1,2-Verknüpfungen von 4 bis 65 % aufweist.

**15.** Kautschukzusammensetzung nach einem der Ansprüche 8 bis 14, dadurch gekennzeichnet, daß sie 1 bis 70 Gew.-Teile mindestens eines weiteren Dienelastomers enthält, das unter Naturkautschuk, Polybutadien, Polyisopren, Butadien-Styrol-Copolymeren und Butadien-Styrol-Isopren-Copolymeren ausgewählt ist.

**16.** Kautschukzusammensetzung nach einem der Ansprüche 8 bis 15, dadurch gekennzeichnet, daß sie ferner Ruß enthält.

**17.** Kautschukzusammensetzung nach Anspruch 16, dadurch gekennzeichnet, daß die Menge an Ruß ≤ 200 %, bezogen auf die vorliegende Menge an Kieselsäure, beträgt.

**18.** Laufstreifen für Luftreifen, dadurch gekennzeichnet, daß er Kieselsäure als verstärkenden Füllstoff sowie ein Dienpolymer enthält, das mit einem Funktionalisierungsmittel der allgemeinen Formel

$$(Y)_m\text{-}R^1\text{-}Si(OR^2)_{3-n}\text{-}R^3_n$$

funktionalisiert ist,
in der bedeuten:

Y den Rest

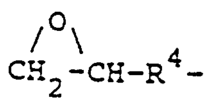

oder

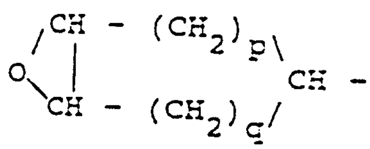

,

| | |
|---|---|
| $R^1$ | Alkyl, Cycloalkyl oder Aryl mit 1 bis 10 C-Atomen, |
| $R^2$ | Alkyl, Aryl, Cycloalkyl, Alkaryl oder Aralkyl mit 1 bis 12 C-Atomen, |
| $R^3$ | Alkyl, Aryl oder Alkaryl mit 1 bis 12 C-Atomen, |
| $R^4$ | einen Kohlenwasserstoffrest mit 1 bis 6 C-Atomen, der ein oder mehrere Sauerstoffatome in der Kohlenwasserstoffkette enthalten kann, |
| n | 0 oder 1, |
| m | 1 oder 2 und |
| p und q 0, 1, 2, 3 oder 4 | mit der Maßgabe, daß die Summe p + q eine ganze Zahl im Bereich von einschließlich 2 bis einschließlich 5 ist, |

wobei das Dienpolymer gleichzeitig die beiden Beziehungen

$$PF = \frac{Ns}{Np \times (f n)} \geq 0{,}85 \quad \text{und} \quad PV = \frac{Ne}{Ns \times m} \geq 0{,}90$$

erfüllt,
worin bedeuten:

| | |
|---|---|
| Ns | die Anzahl der Mole Silicium, die an einem Ende der Polymerkette des funktionalisierten Polymers gebunden sind, |
| Np | die Anzahl der Mole Polymer vor der Funktionalisierung, |
| f(n) | die Funktionalität des Polymerisationsinitiators, |
| Ne | die Anzahl der Mole Epoxyfunktion, die an einem Ende der Polymerkette des funktionalisierten Polymers gebunden ist, und |
| m | dasselbe wie oben angegeben. |

**19.** Laufstreifen für Luftreifen nach Anspruch 18, dadurch gekennzeichnet, daß das Funktionalisierungsmittel unter 3-Glycidyloxypropyltrimethoxysilan und 2-(3,4-Epoxycyclohexyl)-ethyltrimethoxysilan ausgewählt ist.

**20.** Laufstreifen für Luftreifen nach Anspruch 18 oder 19, dadurch gekennzeichnet, daß die Kieselsäure eine gefällte Kieselsäure ist, die eine BET-Oberfläche ≤ 450 $m^2$/g und eine spezifische CTAB-Oberfläche ≤ 450 $m^2$/g aufweist und vorzugsweise hoch dispergierbar ist.

**21.** Laufstreifen für Luftreifen nach einem der Ansprüche 18 bis 20, dadurch gekennzeichnet, daß das funktionalisierte Dienpolymer unter Polybutadien, Butadien-Styrol-Copolymeren und Butadien-Styrol-Isopren-Copolymeren ausgewählt ist.

**22.** Laufstreifen für Luftreifen nach Anspruch 21, dadurch gekennzeichnet, daß das Butadien-Styrol-Copolymer einen Gehalt an 1,2-Verknüpfungen von 4 bis 65 % aufweist.

**23.** Luftreifen mit verringertem Rollwiderstand, dadurch gekennzeichnet, daß er einen Laufstreifen aufweist, der Kieselsäure als verstärkenden Füllstoff sowie ein Dienpolymer aufweist, das mit einem Funktionalisierungsmittel der allgemeinen Formel

$$(Y)_m\text{-}R^1\text{-}Si(OR^2)_{3-n}\text{-}R^3_n$$

funktionalisiert ist,
in der bedeuten:

Y den Rest

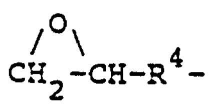 oder 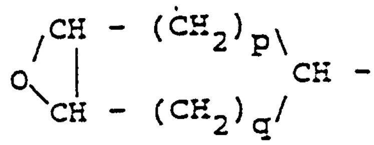 ,

$R^1$ Alk